(19)

(11) **EP 4 546 485 A1**

(12) **EUROPEAN PATENT APPLICATION**
published in accordance with Art. 153(4) EPC

(43) Date of publication:
**30.04.2025 Bulletin 2025/18**

(21) Application number: **23826886.6**

(22) Date of filing: **24.05.2023**

(51) International Patent Classification (IPC):
***H01M 10/0562*** $^{(2010.01)}$ ***C08F 8/04*** $^{(2006.01)}$
***H01M 4/13*** $^{(2010.01)}$ ***H01M 4/139*** $^{(2010.01)}$
***H01M 4/62*** $^{(2006.01)}$ ***H01M 10/052*** $^{(2010.01)}$

(52) Cooperative Patent Classification (CPC):
**C08F 8/04; H01M 4/13; H01M 4/139; H01M 4/62; H01M 10/052; H01M 10/0562**

(86) International application number:
**PCT/JP2023/019395**

(87) International publication number:
**WO 2023/248698 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.06.2022 JP 2022101140**

(71) Applicant: **Zeon Corporation**
**Tokyo 100-8246 (JP)**

(72) Inventor: **MATSUO Yusaku**
**Tokyo 100-8246 (JP)**

(74) Representative: **Maiwald GmbH**
**Elisenhof**
**Elisenstraße 3**
**80335 München (DE)**

(54) **BINDER COMPOSITION FOR ALL-SOLID-STATE SECONDARY BATTERY, SLURRY COMPOSITION FOR ALL-SOLID-STATE SECONDARY BATTERY, FUNCTIONAL LAYER FOR ALL-SOLID-STATE SECONDARY BATTERY, AND ALL-SOLID-STATE SECONDARY BATTERY**

(57) Provided is a binder composition for an all-solid-state secondary battery that can reduce internal resistance of an all-solid-state secondary battery while also imparting excellent adhesiveness to a functional layer for an all-solid-state secondary battery. The binder composition for an all-solid-state secondary battery contains a copolymer including a nitrile group-containing monomer unit and a solvent. The solvent includes an ester solvent having a carbon number of 6 or more. Proportional content of the nitrile group-containing monomer unit in the copolymer is 10 mass% to 22 mass% when all repeating units in the copolymer are taken to be 100 mass%. The copolymer has a tetrahydrofuran-insoluble fraction of 0.5 mass% to 3 mass%, and a copolymer solution obtained when the copolymer is dissolved in the solvent such that concentration of the copolymer is 8 mass% has a haze of 30% to 80%.

## Description

TECHNICAL FIELD

The present disclosure relates to a binder composition for an all-solid-state secondary battery, a slurry composition for an all-solid-state secondary battery, a functional layer for an all-solid-state secondary battery, and an all-solid-state secondary battery.

BACKGROUND

Demand for secondary batteries such as lithium ion batteries has been increasing in recent years for various applications such as mobile information terminals, mobile electronic devices, and other mobile terminals, and also domestic small power storage devices, electric two-wheelers, electric vehicles, and hybrid electric vehicles.

This expansion of applications of secondary batteries has been accompanied by demand for further improvement of secondary battery safety. One example of an effective method for ensuring secondary battery safety is the prevention of leakage of an organic electrolyte solution having an electrolyte dissolved in an organic solvent. On the other hand, studies have also been conducted in relation to a technique of producing a secondary battery (all-solid-state secondary battery) that includes a solid electrolyte layer instead of a flammable organic electrolyte solution and in which all members are formed of solids.

Specifically, an all-solid-state secondary battery normally includes a solid electrolyte layer as an electrolyte layer in-between a positive electrode and a negative electrode. A binder is typically used in production of an all-solid-state secondary battery. The binder is used with the aim of binding functional particles such as solid electrolyte particles or electrode active material particles in a solid electrolyte layer or in an electrode mixed material layer of an electrode that includes the electrode mixed material layer on a current collector (hereinafter, a solid electrolyte layer and an electrode mixed material layer may be referred to collectively using the term "functional layer for an all-solid-state secondary battery"), and thereby preventing shedding of these functional particles from a battery material such as a solid electrolyte layer or an electrode.

For example, Patent Literature (PTL) 1 describes an all-solid-state secondary battery that includes a positive electrode including a positive electrode active material layer (positive electrode mixed material layer), a negative electrode including a negative electrode active material layer (negative electrode mixed material layer), and a solid electrolyte layer positioned between the positive electrode active material layer and the negative electrode active material layer and also describes the formation of the positive electrode active material layer, the negative electrode active material layer, or the solid electrolyte layer using a slurry composition that contains functional particles, a specific polymer serving as a binder, and an organic solvent.

Moreover, PTL 2 describes the formation of a cathode of an all-solid-state lithium ion battery through application, onto a substrate, of a slurry obtained through mixing of an active material, a conductive material, a sulfide solid electrolyte, a specific binder, and a solvent and also describes an all-solid-state lithium ion battery including this cathode.

In the slurry compositions described in PTL 1 and PTL 2, a nitrile polymer is used as the binder and xylene, cyclopentyl methyl ether (CPME), or the like is used as the solvent.

CITATION LIST

Patent Literature

PTL 1: JP5768815B2
PTL 2: JP2020-525992A

SUMMARY

(Technical Problem)

In an all-solid-state secondary battery, it is desirable that a functional layer for an all-solid-state secondary battery has excellent adhesiveness with a battery material (for example, a current collector) that is in contact with the functional layer for an all-solid-state secondary battery, but there is room for further improvement of conventional binder compositions in terms of imparting excellent adhesiveness to a functional layer for an all-solid-state secondary battery.

It is also desirable for an all-solid-state secondary battery to have low internal resistance, but there is also room for further improvement of conventional binder compositions in terms of reducing internal resistance of an all-solid-state secondary battery.

Accordingly, one object of the present disclosure is to provide a binder composition for an all-solid-state secondary battery that can reduce internal resistance of an all-solid-state secondary battery while also imparting excellent adhesiveness to a functional layer for an all-solid-state secondary battery.

Another object of the present disclosure is to provide a slurry composition for an all-solid-state secondary battery that can reduce internal resistance of an all-solid-state secondary battery while also imparting excellent adhesiveness to a functional layer for an all-solid-state secondary battery.

Another object of the present disclosure is to provide a functional layer for an all-solid-state secondary battery that can reduce internal resistance of an all-solid-state secondary battery while also displaying excellent adhesiveness.

Another object of the present disclosure is to provide an all-solid-state secondary battery having reduced internal resistance while also having strong adhesion between battery materials.

(Solution to Problem)

The inventor conducted diligent investigation with the aim of solving the problem set forth above. The inventor found that the problem set forth above can be solved by using a binder composition for an all-solid-state secondary battery that contains a specific copolymer and a specific solvent and for which the haze of a copolymer solution obtained when the copolymer is dissolved in the solvent such that the concentration of the copolymer is 8 mass% is within a specific range. In this manner, the inventor completed the present disclosure.

Specifically, with the aim of advantageously solving the problem set forth above, [1] a presently disclosed binder composition for an all-solid-state secondary battery comprises: a copolymer including a nitrile group-containing monomer unit; and a solvent, wherein the solvent includes an ester solvent having a carbon number of 6 or more, proportional content of the nitrile group-containing monomer unit in the copolymer is not less than 10 mass% and not more than 22 mass% when all repeating units in the copolymer are taken to be 100 mass%, the copolymer has a tetrahydrofuran-insoluble fraction of not less than 0.5 mass% and not more than 3 mass%, and a copolymer solution obtained when the copolymer is dissolved in the solvent such that concentration of the copolymer is 8 mass% has a haze of not less than 30% and not more than 80%.

With the binder composition for an all-solid-state secondary battery set forth above, it is possible to reduce internal resistance of an all-solid-state secondary battery while also imparting excellent adhesiveness to a functional layer for an all-solid-state secondary battery.

Note that a "monomer unit" of a (co)polymer referred to in the present specification means "a repeating unit derived from the monomer that is included in a polymer obtained using that monomer".

The proportional contents of various repeating units (monomer units and structural units) in a copolymer referred to in the present specification can be measured by a nuclear magnetic resonance (NMR) method such as $^{1}$H-NMR.

The tetrahydrofuran-insoluble fraction referred to in the present specification can be measured according to a method described in the EXAMPLES section of the present specification.

The haze of a copolymer solution referred to in the present specification can be measured according to a method described in the EXAMPLES section of the present specification.

[2] In the binder composition for an all-solid-state secondary battery according to the foregoing [1], the copolymer preferably has an iodine value of not less than 0.5 mg/100 mg and not more than 30 mg/100 mg.

When the iodine value of the copolymer is not less than the lower limit set forth above, deterioration of cycle characteristics of an all-solid-state secondary battery can be effectively inhibited.

On the other hand, when the iodine value of the copolymer is not more than the upper limit set forth above, cycle characteristics of an all-solid-state secondary battery can be further improved.

The iodine value of a copolymer referred to in the present specification can be measured according to a method described in the EXAMPLES section of the present specification.

[3] In the binder composition for an all-solid-state secondary battery according to the foregoing [1] or [2], it is preferable that the copolymer further includes an alkylene structural unit, the alkylene structural unit is a hydrogenated 1,3-butadiene unit, and the nitrile group-containing monomer unit is an acrylonitrile unit.

When the copolymer includes the monomer units set forth above, even better adhesiveness can be imparted to a functional layer for an all-solid-state secondary battery. Moreover, when the copolymer includes the monomer units set forth above, dispersibility of functional particles in a slurry composition for an all-solid-state secondary battery that is produced using the binder composition for an all-solid-state secondary battery can be further improved.

[4] In the binder composition for an all-solid-state secondary battery according to any one of the foregoing [1] to [3], the copolymer preferably includes a (meth)acrylic acid ester monomer unit including an alkyl group having a carbon number of not less than 4 and not more than 9.

When the copolymer includes a (meth)acrylic acid ester monomer unit including an alkyl group having a carbon number of not less than 4 and not more than 9, internal resistance of an all-solid-state secondary battery can be further reduced.

[5] In the binder composition for an all-solid-state secondary battery according to the foregoing [4], proportional content of the (meth)acrylic acid ester monomer unit including an alkyl group having a carbon number of not less than 4 and not more than 9 in the copolymer is preferably not less than 25 mass% and not more than 45 mass% when all repeating units in the copolymer are taken to be 100 mass%.

When the proportional content of the (meth)acrylic acid ester monomer unit including an alkyl group having a carbon number of not less than 4 and not more than 9 in the copolymer is not less than the lower limit set forth above when all repeating units in the copolymer are taken to be 100 mass%, internal resistance of an all-solid-state secondary battery can be even further reduced.

On the other hand, when the proportional content of the (meth)acrylic acid ester monomer unit including an alkyl group having a carbon number of not less than 4 and not more than 9 in the copolymer is not more than the upper limit set forth above when all repeating units in the copolymer are taken to be 100 mass%, internal resistance of an all-solid-state secondary battery can be even further reduced. Moreover, cycle characteristics of an all-solid-state secondary battery can be even further improved.

[6] In the binder composition for an all-solid-state secondary battery according to any one of the foregoing [1] to [5], the copolymer preferably includes a hydrophilic group.

When the copolymer includes a hydrophilic group, even better adhesiveness can be imparted to a functional layer for an all-solid-state secondary battery.

Moreover, with the aim of advantageously solving the problem set forth above, [7] a presently disclosed slurry composition for an all-solid-state secondary battery comprises: functional particles; and the binder composition for an all-solid-state secondary battery according to any one of the foregoing [1] to [6].

With the slurry composition for an all-solid-state secondary battery set forth above, it is possible to reduce internal resistance of an all-solid-state secondary battery while also imparting excellent adhesiveness to a functional layer for an all-solid-state secondary battery.

[8] In the slurry composition for an all-solid-state secondary battery according to the foregoing [7], the functional particles are preferably either or both of solid electrolyte particles and electrode active material particles.

When the functional particles are either or both of solid electrolyte particles and electrode active material particles, it is possible to impart functionality as a solid electrolyte layer and/or electrode mixed material layer to a functional layer for an all-solid-state secondary battery.

Furthermore, with the aim of advantageously solving the problem set forth above, [9] a presently disclosed functional layer for an all-solid-state secondary battery is formed using the slurry composition for an all-solid-state secondary battery according to the foregoing [7] or [8].

With the functional layer for an all-solid-state secondary battery set forth above, it is possible to reduce internal resistance of an all-solid-state secondary battery while also displaying excellent adhesiveness.

Also, with the aim of advantageously solving the problem set forth above, [10] a presently disclosed all-solid-state secondary battery comprises the functional layer for an all-solid-state secondary battery according to the foregoing [9].

With the all-solid-state secondary battery set forth above, it is possible to obtain an all-solid-state secondary battery having reduced internal resistance while also having strong adhesion between battery materials.

(Advantageous Effect)

According to the present disclosure, it is possible to provide a binder composition for an all-solid-state secondary battery that can reduce internal resistance of an all-solid-state secondary battery while also imparting excellent adhesiveness to a functional layer for an all-solid-state secondary battery.

Moreover, according to the present disclosure, it is possible to provide a slurry composition for an all-solid-state secondary battery that can reduce internal resistance of an all-solid-state secondary battery while also imparting excellent adhesiveness to a functional layer for an all-solid-state secondary battery.

Furthermore, according to the present disclosure, it is possible to provide a functional layer for an all-solid-state secondary battery that can reduce internal resistance of an all-solid-state secondary battery while also displaying excellent adhesiveness.

Also, according to the present disclosure, it is possible to provide an all-solid-state secondary battery having reduced internal resistance while also having strong adhesion between battery materials.

DETAILED DESCRIPTION

The following provides a detailed description of embodiments of the present disclosure.

The presently disclosed binder composition for an all-solid-state secondary battery (hereinafter, also referred to simply as a "binder composition") can be used in production of the presently disclosed slurry composition for an all-solid-state secondary battery (hereinafter, also referred to simply as a "slurry composition"). Moreover, the presently disclosed slurry composition can be used in formation of a functional layer for an all-solid-state secondary battery (hereinafter, also referred to simply as a "functional layer") such as a solid electrolyte layer or an electrode mixed material layer. Furthermore, the presently disclosed all-solid-state secondary battery includes the presently disclosed functional layer, which is formed using the presently disclosed slurry composition.

(Binder composition for all-solid-state secondary battery)

The presently disclosed binder composition for an all-solid-state secondary battery contains a specific copolymer and a specific solvent. The solvent includes an ester solvent having a carbon number of 6 or more. Moreover, the copolymer includes a nitrile group-containing monomer unit. Furthermore, the proportional content of the nitrile group-containing monomer unit in the copolymer is not less than 10 mass% and not more than 22 mass% when all repeating units in the copolymer are taken to be 100 mass%, and the tetrahydrofuran-insoluble fraction (hereinafter, also referred to as the "THF-insoluble fraction") of the copolymer is not less than 0.5 mass% and not more than 3 mass%. Also, the copolymer and the solvent are a copolymer and solvent that yield a copolymer solution having a haze of not less than 30% and not more than 80% when the copolymer is dissolved in the solvent such that the concentration of the copolymer is 8 mass%. Note that the presently disclosed binder composition may optionally further contain other components besides the specific copolymer and the specific solvent described above. Examples of such other components include a surfactant, a dispersant, and an antioxidant.

With the binder composition set forth above, it is possible to reduce internal resistance of an all-solid-state secondary battery while also imparting excellent adhesiveness to a functional layer. Moreover, with the binder composition set forth above, it is possible to improve cycle characteristics of an all-solid-state secondary battery.

<Copolymer>

The copolymer is a component that can prevent shedding of functional particles from a functional layer that contains the functional particles.

The copolymer has the specific chemical composition and characteristics described above and is preferably a copolymer that includes a hydrophilic group because this makes it possible to impart even better adhesiveness to a functional layer. The hydrophilic group may be a carboxy group, a sulfo group, a phosphate group, a hydroxy group, or the like, for example. Of these hydrophilic groups, a carboxy group and a hydroxy group are preferable because they make it possible to impart even better adhesiveness to a functional layer, and a hydroxy group is more preferable. The copolymer may include just one of these types of hydrophilic groups or may include two or more of these types of hydrophilic groups.

No specific limitations are placed on the method by which a hydrophilic group is introduced into the copolymer. Although a method in which a copolymer is produced using a monomer composition containing a subsequently described hydrophilic group-containing monomer so as to obtain a copolymer including a hydrophilic group-containing monomer unit or a method in which a copolymer having a specific chemical composition is modified (for example, terminal modified) so as to obtain a copolymer including any of the above-described hydrophilic groups may be adopted, the former of these methods is preferable.

<<Chemical composition of copolymer>>

The copolymer includes a nitrile group-containing monomer unit and may optionally include a conjugated diene monomer unit, an alkylene structural unit, a hydrophilic group-containing monomer unit, a (meth)acrylic acid ester monomer unit including an alkyl group having a carbon number of not less than 4 and not more than 9, and an aromatic vinyl monomer unit.

Note that in the present specification, "(meth)acryl" indicates "acryl" and/or "methacryl".

[Nitrile group-containing monomer unit]

The nitrile group-containing monomer unit is a repeating unit that is derived from a nitrile group-containing monomer.

Examples of nitrile group-containing monomers that can form the nitrile group-containing monomer unit include $\alpha,\beta$-ethylenically unsaturated nitrile monomers. Any $\alpha,\beta$-ethylenically unsaturated compound that includes a nitrile group may be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Of these examples, acrylonitrile and methacrylonitrile are preferable as nitrile group-containing monomers because they can impart even better adhesiveness to a functional layer, and acrylonitrile is more preferable. One of these nitrile group-containing monomers can be used individually, or two or more of these nitrile group-containing monomers can be used in combination.

In the presently disclosed binder composition, the proportional content of the nitrile group-containing monomer unit in the copolymer is not less than 10 mass% and not more than 22 mass% when all repeating units in the copolymer are taken to be 100 mass%. Moreover, the proportional content of the nitrile group-containing monomer unit in the copolymer when all repeating units in the copolymer are taken to be 100 mass% is preferably 12 mass% or more, and more preferably 14 mass% or more, and is preferably 20.5 mass% or less, and more preferably 19 mass% or less.

When the proportional content of the nitrile group-containing monomer unit in the copolymer is 10 mass% or more when all repeating units in the copolymer are taken to be 100 mass%, adhesive capability of the copolymer itself improves, and excellent adhesiveness can be imparted to a functional layer.

On the other hand, when the proportional content of the nitrile group-containing monomer unit in the copolymer is 22 mass% or less when all repeating units in the copolymer are taken to be 100 mass%, excellent adhesiveness can be imparted to a functional layer. The reason for this is presumed to be that because solubility of the copolymer in the solvent improves and because it is possible to obtain a slurry composition in which functional particles, etc. are dispersed well, the formation of a functional layer using such a slurry composition results in the formation of a functional layer in which functional particles, etc. are dispersed well. Moreover, since functional particles, etc. can be dispersed well in a functional layer, it is possible to reduce internal resistance of an all-solid-state secondary battery and also to improve cycle characteristics of an all-solid-state secondary battery.

[Conjugated diene monomer unit]

The conjugated diene monomer unit is a repeating unit that is derived from a conjugated diene monomer.

Examples of conjugated diene monomers that can form the conjugated diene monomer unit include conjugated diene compounds such as 1,3-butadiene, isoprene, 2,3-dimethyl-1,3-butadiene, and 1,3-pentadiene. Of these conjugated diene monomers, 1,3-butadiene is preferable. One of these conjugated diene monomers can be used individually, or two or more of these conjugated diene monomers can be used in combination.

The proportional content of the conjugated diene monomer unit in the copolymer when all repeating units in the copolymer are taken to be 100 mass% is preferably 10 mass% or less, and more preferably 5 mass% or less.

On the other hand, the proportional content of the conjugated diene monomer unit in the copolymer when all repeating units in the copolymer are taken to be 100 mass% is 0.5 mass% or more, for example, and may be 1 mass% or more.

[Alkylene structural unit]

The alkylene structural unit is a repeating unit composed only of an alkylene structure represented by a general formula $-C_nH_{2n}-$ (n is an integer of 2 or more). The inclusion of the alkylene structural unit in the copolymer can improve dispersibility of functional particles in a slurry composition that is produced using the binder composition.

Although the alkylene structural unit may be linear or branched, the alkylene structural unit is preferably linear (i.e., is preferably a linear alkylene structural unit) from a viewpoint of even further improving dispersibility of functional particles in a slurry composition. Moreover, the carbon number of the alkylene structural unit is preferably 4 or more (i.e., n in the preceding general formula $-C_nH_{2n}-$ is preferably an integer of 4 or more).

No specific limitations are placed on the method by which the alkylene structural unit is introduced into the copolymer. For example, either of the following methods (1) or (2) may be adopted.

(1) A method in which a copolymer is produced from a monomer composition containing a conjugated diene monomer such as previously described and then this copolymer is hydrogenated so as to convert a conjugated diene monomer unit to an alkylene structural unit

(2) A method in which a copolymer is produced from a monomer composition containing a 1-olefin monomer

Of these methods, method (1) is preferable because this enables simple production of the copolymer.

Examples of conjugated diene monomers that can be used in method (1) include conjugated diene compounds such as 1,3-butadiene, isoprene, 2,3-dimethyl-1,3-butadiene, and 1,3-pentadiene. Of these conjugated diene monomers, 1,3-butadiene is preferable. One of these conjugated diene monomers can be used individually, or two or more of these conjugated diene monomers can be used in combination. The alkylene structural unit is preferably a structural unit obtained through hydrogenation of a conjugated diene monomer unit (i.e., is preferably a hydrogenated conjugated diene unit). Moreover, the alkylene structural unit is more preferably a structural unit obtained through hydrogenation of a 1,3-butadiene unit (i.e., is more preferably a hydrogenated 1,3-butadiene unit) because this can further improve dispersibility of functional particles in a slurry composition that is produced using the binder composition. The hydrogenation can be performed using a commonly known method such as described further below.

On the other hand, examples of 1-olefin monomers that can be used in method (2) include 1-butene and 1-hexene.

One of these conjugated diene monomers or 1-olefin monomers can be used individually, or two or more of these conjugated diene monomers or 1-olefin monomers can be used in combination.

In a case in which the alkylene structural unit is introduced into the copolymer through method (1), a conjugated diene monomer unit can remain in the copolymer in a situation in which conjugated diene monomer unit hydrogenation is not complete.

The total proportional content of the alkylene structural unit and the conjugated diene monomer unit in the copolymer when all repeating units (total of structural units and monomer units) in the copolymer are taken to be 100 mass% is preferably 30 mass% or more, and more preferably 40 mass% or more, and is preferably 70 mass% or less, more preferably 60 mass% or less, and even more preferably 50 mass% or less.

When the total proportional content of the alkylene structural unit and the conjugated diene monomer unit in the copolymer is within any of the ranges set forth above when all repeating units in the copolymer are taken to be 100 mass%, dispersibility of functional particles in a slurry composition that is produced using the binder composition can be even further improved.

Note that in a case in which the copolymer does not include a conjugated diene monomer unit, such as a case in which there is complete conjugated diene monomer unit hydrogenation in method (1) or a case in which the copolymer is produced by method (2), the proportional content of the alkylene structural unit in the copolymer when all repeating units (total of structural units and monomer units) in the copolymer are taken to be 100 mass% is preferably 30 mass% or more, and more preferably 40 mass% or more, and is preferably 70 mass% or less, more preferably 60 mass% or less, and even more preferably 50 mass% or less.

When the proportional content of the alkylene structural unit in the copolymer is within any of the ranges set forth above when all repeating units in the copolymer are taken to be 100 mass%, dispersibility of functional particles in a slurry composition that is produced using the binder composition can be even further improved.

[Hydrophilic group-containing monomer unit]

The hydrophilic group-containing monomer unit is a repeating unit that is derived from a hydrophilic group-containing monomer. The inclusion of the hydrophilic group-containing monomer unit in the copolymer makes it possible to impart even better adhesiveness to a functional layer.

Examples of hydrophilic group-containing monomers that can form the hydrophilic group-containing monomer unit include carboxy group-containing monomers, sulfo group-containing monomers, phosphate group-containing monomers, and hydroxy group-containing monomers. One of these hydrophilic group-containing monomers can be used individually, or two or more of these hydrophilic group-containing monomers can be used in combination.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group through hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Of the examples described above, monocarboxylic acids are preferable, and methacrylic acid is more preferable.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present specification, "(meth)allyl" indicates "allyl" and/or "methallyl".

Examples of phosphate group-containing monomers include 2-(meth)acryloyloxyethyl phosphate, methyl-2-(meth)acryloyloxyethyl phosphate, ethyl-(meth)acryloyloxyethyl phosphate, vinylphosphonic acid, and dimethyl vinylphosphonate.

Note that in the present specification, "(meth)acryloyl" indicates "acryloyl" and/or "methacryloyl".

Examples of hydroxy group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 1,4-cyclohexanedimethanol monoacrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula: $CH_2=CR^1-COO-(C_nH_{2n}O)_m-H$ (where m represents an integer of 2 to 9, n represents an integer of 2 to 4, and $R^1$ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

Of the examples described above, alkanol esters of ethylenically unsaturated carboxylic acids are preferable, and 1,4-cyclohexanedimethanol monoacrylate and 2-hydroxyethyl methacrylate are more preferable.

From a viewpoint of even further improving dispersibility of functional particles in a slurry composition that is produced using the binder composition, it is preferable that a monomer including a carboxy group (carboxy group-containing monomer) and/or a monomer including a hydroxy group (hydroxy group-containing monomer) is used, and more preferable that a hydroxy group-containing monomer is used as a hydrophilic group-containing monomer.

The proportional content of the hydrophilic group-containing monomer unit in the copolymer when all repeating units in the copolymer are taken to be 100 mass% is preferably 1 mass% or more, more preferably 1.5 mass% or more, and even more preferably 2 mass% or more, and is preferably 10 mass% or less, more preferably 8 mass% or less, and even more preferably 6 mass% or less.

When the proportional content of the hydrophilic group-containing monomer unit in the copolymer is not less than any of the lower limits set forth above when all repeating units in the copolymer are taken to be 100 mass%, adhesive capability of the copolymer itself further improves, and even better adhesiveness can be imparted to a functional layer.

On the other hand, when the proportional content of the hydrophilic group-containing monomer unit in the copolymer is not more than any of the upper limits set forth above when all repeating units in the copolymer are taken to be 100 mass%, even better adhesiveness can be imparted to a functional layer. The reason for this is presumed to be that because solubility of the copolymer in the solvent further improves and because it is possible to obtain a slurry composition in which functional particles, etc. are even better dispersed, the formation of a functional layer using such a slurry composition results in the formation of a functional layer in which functional particles, etc. are even better dispersed. Moreover, since functional particles, etc. can be even better dispersed in a functional layer, it is possible to further reduce internal resistance of an all-solid-state secondary battery and also to further improve cycle characteristics of an all-solid-state secondary battery.

[(Meth)acrylic acid ester monomer unit including alkyl group having carbon number of not less than 4 and not more than 9]

The (meth)acrylic acid ester monomer unit including an alkyl group having a carbon number of not less than 4 and not more than 9 is a repeating unit that is derived from a (meth)acrylic acid ester monomer having a carbon number of not less than 4 and not more than 9. The inclusion of the (meth)acrylic acid ester monomer unit including an alkyl group having a carbon number of not less than 4 and not more than 9 in the copolymer makes it possible to further improve dispersibility of functional particles in a slurry composition that is produced using the binder composition, and, as a result, can further reduce internal resistance of an all-solid-state secondary battery.

The phrase "including an alkyl group having a carbon number of not less than 4 and not more than 9" means that an alkyl group having a carbon number of not less than 4 and not more than 9 is bonded to a non-carbonyl oxygen atom of the (meth)acrylic acid ester monomer. Although the alkyl group having a carbon number of not less than 4 and not more than 9 may be linear, branched, or cyclic, the alkyl group having a carbon number of not less than 4 and not more than 9 is preferably linear because this enables simple production of the copolymer.

Note that the term "(meth)acrylic acid ester monomer unit including an alkyl group having a carbon number of not less than 4 and not more than 9" is not inclusive of hydrophilic group-containing monomer units such as previously described. Specifically, in a case in which a hydroxy group is bonded to the alkyl group having a carbon number of not less than 4 and not more than 9, for example, the term "(meth)acrylic acid ester monomer unit including an alkyl group having a carbon number of not less than 4 and not more than 9" is not inclusive of such a monomer unit.

In the (meth)acrylic acid ester monomer unit including an alkyl group having a carbon number of not less than 4 and not more than 9, the carbon number of the alkyl group is preferably 8 or less, and more preferably 6 or less.

When the carbon number of the alkyl group is not more than any of the upper limits set forth above, the copolymer can easily be produced.

Examples of (meth)acrylic acid ester monomers including an alkyl group having a carbon number of not less than 4 and not more than 9 (hereinafter, also referred to as "C4-C9 (meth)acrylic acid ester monomers") that can form the C4-C9 (meth)acrylic acid ester monomer unit include acrylic acid alkyl esters such as n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, and nonyl acrylate; and methacrylic acid alkyl esters such as n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, and nonyl methacrylate. Of these C4-C9 (meth)acrylic acid ester monomers, n-butyl acrylate is preferable.

One of these C4-C9 (meth)acrylic acid ester monomers can be used individually, or two or more of these C4-C9 (meth)acrylic acid ester monomers can be used in combination.

The proportional content of the C4-C9 (meth)acrylic acid ester monomer unit in the copolymer when all repeating units in the copolymer are taken to be 100 mass% is preferably 25 mass% or more, more preferably 27.5 mass% or more, and even more preferably 30 mass% or more, and is preferably 45 mass% or less, more preferably 42.5 mass% or less, and even more preferably 40 mass% or less.

When the proportional content of the C4-C9 (meth)acrylic acid ester monomer unit in the copolymer is not less than any of the lower limits set forth above when all repeating units in the copolymer are taken to be 100 mass%, dispersibility of functional particles in a slurry composition that is produced using the binder composition can be even further improved, and, as a result, internal resistance of an all-solid-state secondary battery can be even further reduced.

On the other hand, when the proportional content of the C4-C9 (meth)acrylic acid ester monomer unit in the copolymer is not more than any of the upper limits set forth above when all repeating units in the copolymer are taken to be 100 mass%, flexibility of a functional layer even further improves, close adherence between a functional layer and a layer adjacent to the functional layer even further improves, and, as a result, internal resistance of an all-solid-state secondary battery can be even further reduced. Moreover, since close adherence between a functional layer and a layer adjacent to the functional layer can be even further improved, cycle characteristics of an all-solid-state secondary battery can be even further improved.

[Aromatic vinyl monomer unit]

The aromatic vinyl monomer unit is a repeating unit that is derived from an aromatic vinyl monomer.

Examples of aromatic vinyl monomers that can form the aromatic vinyl monomer unit include styrene, $\alpha$-methylstyrene, vinyltoluene, and divinylbenzene. One of these aromatic vinyl monomers can be used individually, or two or more of these aromatic vinyl monomers can be used in combination.

The proportional content of the aromatic vinyl monomer unit in the copolymer when all repeating units in the copolymer are taken to be 100 mass% is preferably 1 mass% or more, more preferably 5 mass% or more, and even more preferably 8 mass% or more, and is preferably 30 mass% or less, more preferably 20 mass% or less, and even more preferably 12 mass% or less.

[Other monomer units]

The copolymer may include monomer units other than the above-described nitrile group-containing monomer unit, conjugated diene monomer unit, alkylene structural unit, hydrophilic group-containing monomer unit, C4-C9 (meth) acrylic acid ester monomer unit, and aromatic vinyl monomer unit (hereinafter, also referred to as "other monomer units") as repeating units.

Examples of other monomer units include a (meth)acrylic acid ester monomer unit including an alkyl group other than an alkyl group having a carbon number of not less than 4 and not more than 9 (i.e., a (meth)acrylic acid ester monomer unit including an alkyl group having a carbon number of 3 or less or a (meth)acrylic acid ester monomer unit including an alkyl group having a carbon number of 10 or more).

Examples of (meth)acrylic acid ester monomers that can form the (meth)acrylic acid ester monomer unit including an alkyl group having a carbon number of 3 or less include methyl acrylate, ethyl acrylate, n-propyl acrylate, isopropyl acrylate, methyl methacrylate, ethyl methacrylate, n-propyl methacrylate, and isopropyl methacrylate.

Examples of (meth)acrylic acid ester monomers that can form the (meth)acrylic acid ester monomer unit including an alkyl group having a carbon number of 10 or more include decyl acrylate, lauryl acrylate, n-tetradecyl acrylate, stearyl acrylate, decyl methacrylate, lauryl methacrylate, n-tetradecyl methacrylate, and stearyl methacrylate.

The proportional content of other monomer units in the copolymer when all repeating units in the copolymer are taken to be 100 mass% is preferably 5 mass% or less, more preferably 4 mass% or less, even more preferably 3 mass% or less, further preferably 2 mass% or less, even further preferably 1 mass% or less, and particularly preferably 0 mass%. In other words, it is particularly preferable that the copolymer does not include other monomer units.

<<Production method of copolymer>>

No specific limitations are placed on the method by which the above-described copolymer is produced. For example, the copolymer can be produced by any of solution polymerization, suspension polymerization, bulk polymerization, emulsion polymerization, or the like. Of these methods, emulsion polymerization is preferable. Moreover, addition polymerization such as ionic polymerization, radical polymerization, or living radical polymerization can be adopted as the polymerization method. A known polymerization initiator can be used as a polymerization initiator.

The polymerization initiator may be an inorganic peroxide such as potassium persulfate, sodium persulfate, ammonium persulfate, potassium superphosphate, or hydrogen peroxide; an organic peroxide such as t-butyl peroxide, cumene hydroperoxide, p-menthane hydroperoxide, di-t-butyl peroxide, t-butyl cumyl peroxide, acetyl peroxide, isobutyryl peroxide, octanoyl peroxide, dibenzoyl peroxide, 3,5,5-trimethylhexanoyl peroxide, or t-butyl peroxyisobutyrate; an azo compound such as azobisisobutyronitrile, azobis-2,4-dimethylvaleronitrile, azobiscyclohexanecarbonitrile, or azobis(methyl isobutyrate); or the like, for example. One of these polymerization initiators can be used individually, or two or more of these polymerization initiators can be used in combination. The polymerization initiator is preferably an inorganic or organic peroxide.

In a case in which a peroxide is used as the polymerization initiator, the peroxide can be used in combination with a reductant such as sodium bisulfite or ferrous sulfate as a redox polymerization initiator.

In a case in which the previously described method (1) is adopted (i.e., in a case in which a conjugated diene monomer unit is converted to an alkylene structural unit through hydrogenation), it is preferable that radical polymerization using a redox polymerization initiator that includes an iron-based compound is adopted as the polymerization method of the pre-hydrogenation copolymer.

A molecular weight modifier including a sulfur-containing group such as a mercapto group is preferably used in the polymerization. Examples of compounds including a mercapto group that may be used as the molecular weight modifier include mercapto group-containing compounds having a carbon number of 8 to 12 such as octyl mercaptan, 2,2,4,6,6-pentamethyl-4-heptanethiol, 2,4,4,6,6-pentamethyl-2-heptanethiol, 2,3,4,6,6-pentamethyl-2-heptanethiol, 2,3,4,6,6-pentamethyl-3-heptanethiol, t-dodecyl mercaptan, and n-dodecyl mercaptan; and mercapto group-containing compounds such as 2,2,4,6,6-pentamethyl-4-octanethiol, 2,2,4,6,6,8,8-heptamethyl-4-nonanethiol, bis(2-mercaptoethyl) sulfide, methyl 3-mercaptopropionate, and 1-butanethiol. Of these compounds, mercapto group-containing compounds having a carbon number of 8 to 12 are preferable, and t-dodecyl mercaptan is more preferable.

The polymerization temperature is preferably 7°C or higher, more preferably 8°C or higher, and even more preferably 9°C or higher, and is preferably 18°C or lower, more preferably 15°C or lower, and even more preferably 12°C or lower.

When the polymerization temperature is within any of the ranges set forth above, the THF-insoluble fraction and weight-average molecular weight of the copolymer can easily be adjusted.

After emulsion polymerization is performed, for example, it is preferable that in a case in which method (1) is adopted, a coagulant such as aluminum sulfate is added to an obtained water dispersion of the pre-hydrogenation polymer to cause coagulation, the pre-hydrogenation copolymer is collected, and the collected material (filtration residue in a case in which collection is by filtration) is subjected to hydrogenation (optionally after performing a subsequently described "metathesis reaction"). During the above, the collected material (filtration residue or the like) may be washed with water or the like prior to performing hydrogenation. Note that an antioxidant such as an alkylated phenol may be added to the water dispersion prior to addition of the coagulant.

The hydrogenation of the pre-hydrogenation copolymer can be performed by a known hydrogenation method such as oil-layer hydrogenation or water-layer hydrogenation. The catalyst used in the hydrogenation may be any selective hydrogenation catalyst that is commonly known such as a palladium-based catalyst or a rhodium-based catalyst. Two or more of such catalysts may be used in combination.

Although the amount of the hydrogenation catalyst that is used may be set as appropriate, the amount in terms of metal of the hydrogenation catalyst relative to the amount of the pre-hydrogenation copolymer that is to be hydrogenated is preferably 50 mass ppm or more, more preferably 200 mass ppm or more, and even more preferably 300 mass ppm or more, and is preferably 4,000 mass ppm or less, more preferably 2,000 mass ppm or less, and even more preferably 1,000 mass ppm or less.

When the used amount of the hydrogenation catalyst is within any of the ranges set forth above, the iodine value of the copolymer can easily be adjusted.

The hydrogenation of the pre-hydrogenation copolymer may be performed by a method described in JP4509792B2, for example. Specifically, the hydrogenation of the pre-hydrogenation copolymer may be performed after subjecting the copolymer to a metathesis reaction in the presence of a catalyst and a co-olefin.

The catalyst in the metathesis reaction may be a known ruthenium-based catalyst. Of such catalysts, Grubbs' catalysts such as bis(tricyclohexylphosphine)benzylidene ruthenium dichloride and 1,3-bis(2,4,6-trimethylphenyl)-2-(imidazolidinylidene)(dichlorophenylmethylene)(tricyclohexylphosphine)ruth enium are preferable as the catalyst in the metathesis reaction. Moreover, an olefin having a carbon number of 2 to 16 such as ethylene, isobutene, or 1-hexene can be used as the co-olefin. Furthermore, a known homogeneous hydrogenation catalyst such as Wilkinson's catalyst ($(PPh_3)_3RhCl$), for example, can be used as a hydrogenation catalyst in hydrogenation performed after the metathesis reaction.

<<Properties of copolymer>>

[THF-insoluble fraction]

In the presently disclosed binder composition, the copolymer has a THF-insoluble fraction of not less than 0.5 mass% and not more than 3 mass%. Moreover, the THF-insoluble fraction of the copolymer is preferably 0.75 mass% or more, and more preferably 1.0 mass% or more, and is preferably 2.5 mass% or less, and more preferably 2.0 mass% or less.

When the THF-insoluble fraction of the copolymer is 0.5 mass% or more, the copolymer itself has suitable strength, and, as a result, excellent adhesiveness can be imparted to a functional layer.

On the other hand, when the THF-insoluble fraction of the copolymer is 3 mass% or less, flexibility of a functional layer improves, close adherence between a functional layer and a layer adjacent to the functional layer improves, and, as a result, internal resistance of an all-solid-state secondary battery can be reduced. Moreover, since close adherence between a functional layer and a layer adjacent to the functional layer can be improved, cycle characteristics of an all-solid-state secondary battery can be improved.

Note that the THF-insoluble fraction of the copolymer can be adjusted through the chemical composition (proportional contents of various repeating units) and weight-average molecular weight of the copolymer, the conditions (for example, polymerization temperature) in the production method of the copolymer, and so forth.

[Iodine value]

The iodine value of the copolymer is preferably 0.5 mg/100 mg or more, more preferably 1.0 mg/100 mg or more, and even more preferably 2.0 mg/100 mg or more, and is preferably 30 mg/100 mg or less, more preferably 15 mg/100 mg or less, and even more preferably 10 mg/100 mg or less.

In order to set the iodine value of the copolymer as less than any of the lower limits set forth above, it is necessary to use an excessive amount of catalyst in hydrogenation. The use of an excessive amount of catalyst in this manner results in increased inclusion of impurities (residual metal, etc.) in the binder composition, which may result in deterioration of cycle characteristics of an all-solid-state secondary battery. Accordingly, deterioration of cycle characteristics of an all-solid-state secondary battery can be effectively inhibited when the iodine value of the copolymer is not less than any of the lower limits set forth above.

On the other hand, when the iodine value of the copolymer is not more than any of the upper limits set forth above, the occurrence of side reactions between the copolymer and functional particles is inhibited, and, as a result, cycle characteristics of an all-solid-state secondary battery can be further improved.

Note that the iodine value of the copolymer can be adjusted through the amount of the hydrogenation catalyst that is used in hydrogenation of the copolymer, for example.

[Weight-average molecular weight (Mw)]

The weight-average molecular weight of the copolymer is preferably 5,000 or more, more preferably 10,000 or more, even more preferably 30,000 or more, and further preferably 40,000 or more, and is preferably 3,000,000 or less, more preferably 2,000,000 or less, even more preferably 1,000,000 or less, further preferably 80,000 or less, and even further preferably 60,000 or less.

When the weight-average molecular weight is not less than any of the lower limits set forth above, even better adhesiveness can be imparted to a functional layer. Moreover, cycle characteristics of an all-solid-state secondary battery can be further improved.

On the other hand, when the weight-average molecular weight of the copolymer is not more than any of the upper limits set forth above, even better adhesiveness can be imparted to a functional layer. The reason for this is presumed to be that because solubility of the copolymer in the solvent improves and because it is possible to obtain a slurry composition in which functional particles, etc. are even better dispersed, the formation of a functional layer using such a slurry composition results in the formation of a functional layer in which functional particles, etc. are even better dispersed. Moreover, since functional particles, etc. can be even better dispersed in a functional layer, it is possible to further reduce internal resistance of an all-solid-state secondary battery and also to further improve cycle characteristics of an all-solid-state secondary battery.

The "weight-average molecular weight" referred to in the present specification can be measured by a method described in the EXAMPLES section.

[Molecular weight distribution]

The molecular weight distribution of the copolymer is preferably 1.5 or more, more preferably 1.8 or more, and even more preferably 2.0 or more, and is preferably 6.0 or less, more preferably 5.0 or less, and even more preferably 4.0 or less.

When the molecular weight distribution of the copolymer is within any of the ranges set forth above, even better adhesiveness can be imparted to a functional layer. The reason for this is presumed to be that because solubility of the copolymer in the solvent improves and because it is possible to obtain a slurry composition in which functional particles, etc. are even better dispersed, the formation of a functional layer using such a slurry composition results in the formation of a functional layer in which functional particles, etc. are even better dispersed. Moreover, since functional particles, etc. can be even better dispersed in a functional layer, it is possible to further reduce internal resistance of an all-solid-state secondary battery and also to further improve cycle characteristics of an all-solid-state secondary battery.

The "molecular weight distribution" referred to in the present specification can be determined by calculating a ratio of the weight-average molecular weight relative to the number-average molecular weight (weight-average molecular weight/number-average molecular weight). Moreover, the "number-average molecular weight" can be measured as a standard polystyrene-equivalent value by gel permeation chromatography.

Note that the weight-average molecular weight and number-average molecular weight of the copolymer can be controlled through the chemical composition (proportional contents of various repeating units) of the copolymer, the amount of molecular weight modifier compounded during polymerization, and the conditions (for example, polymerization temperature) in the production method of the copolymer, for example.

<<Proportional content of copolymer>>

The proportional content of the copolymer in the binder composition when the total of all components (inclusive of the solvent) in the binder composition is taken to be 100 mass% is preferably 1 mass% or more, more preferably 5 mass% or more, and even more preferably 8 mass% or more, and is preferably 30 mass% or less, more preferably 20 mass% or less, and even more preferably 15 mass% or less.

<Solvent>

The solvent that is used in the presently disclosed binder composition includes an ester solvent having a carbon number of 6 or more and may optionally further include other solvents that are miscible with the ester solvent having a carbon number of 6 or more (hereinafter, also referred to as "other solvents"). Examples of other solvents that may be used include ester solvents having a carbon number of 5 or less, ketone solvents, and alcohol solvents.

The use of a solvent that includes an ester solvent having a carbon number of 6 or more makes it possible to maintain good haze of a copolymer solution. Moreover, by using a solvent that includes an ester solvent having a carbon number of 6 or more, the occurrence of sides reactions between the solvent and functional particles is inhibited, and, as a result, cycle characteristics of an all-solid-state secondary battery can be improved.

Note that the term "ester solvent having a carbon number of 6 or more" refers to an ester solvent in which the total number of carbons exclusive of a carbonyl group carbon atom is 6 or more. Specifically, this means that the total of the carbon number of an organic group (hereinafter, also referred to as "organic group A") that is bonded to a carbonyl group carbon atom and the carbon number of an organic group (hereinafter, also referred to as "organic group B") that is bonded to a non-carbonyl oxygen atom is 6 or more. For example, isobutyl isobutyrate is an ester solvent having a carbon number of 7 since the carbon number of the organic group A is 3 and the carbon number of the organic group B is 4. The organic group A and/or organic group B is preferably a hydrocarbon group that does not include a substituent, and is more preferably an alkyl group.

Note that the carbon number of the ester solvent is 12 or less, for example, and may be 10 or less, but is not specifically limited so long as the haze of a copolymer solution is within a specific range.

The ester solvent having a carbon number of 6 or more may be ethyl butyrate, butyl butyrate, isobutyl isobutyrate, pentyl acetate, isopentyl acetate, ethyl caproate, octyl acetate, pentyl valerate, or the like, for example. Of these solvents, butyl butyrate, isobutyl isobutyrate, and octyl acetate are preferable, and butyl butyrate and isobutyl isobutyrate are more preferable.
The proportional content of the ester solvent in the solvent is preferably 70 mass% or more, more preferably 80 mass% or more, even more preferably 90 mass% or more, further preferably 95 mass% or more, even further preferably 99 mass% or more, and particularly preferably 100 mass%. In other words, it is particularly preferable that the solvent does not include other solvents.

<Haze>

In the presently disclosed binder composition, the haze of a copolymer solution obtained when the copolymer is dissolved in the solvent such that the concentration of the copolymer is 8 mass% is not less than 30% and not more than 80%. Moreover, the haze of the copolymer solution is preferably 40% or more, and more preferably 50% or more, and is preferably 75% or less, and more preferably 70% or less.
When the haze of the copolymer solution is 30% or more, internal resistance of an all-solid-state secondary battery can be reduced while also imparting excellent adhesiveness to a functional layer. Although the reason for this is not certain, it is presumed to be as follows. Firstly, in a situation in which the haze of the copolymer solution is less than 30%, this indicates that the copolymer is almost completely dissolved in the solvent. When a binder composition containing such a copolymer and solvent is used, surfaces of functional particles become mostly covered by the copolymer, and the functional particles become indirectly in contact with one another via the copolymer in a formed functional layer, which can result in an increase of internal resistance of an all-solid-state secondary battery. Conversely, when the haze of the copolymer solution is 30% or more as in the presently disclosed binder composition, surfaces of functional particles become suitably covered by the copolymer, and there is an increase of sections where the functional particles are directly in contact with one another in a formed functional layer, which is presumed to result in reduction of internal resistance of an all-solid-state secondary battery. In addition, a good balance of sections where the functional particles are indirectly in contact with one another via the copolymer and sections where the functional particles are directly in contact with one another in the functional layer is presumed to result in the preservation of excellent adhesiveness of the functional layer.
On the other hand, when the haze of the copolymer solution is 80% or less, excellent adhesiveness can be imparted to a functional layer. The reason for this is presumed to be that because solubility of the copolymer in the solvent improves and because it is possible to obtain a slurry composition in which functional particles, etc. are dispersed well, the formation of a functional layer using such a slurry composition results in the formation of a functional layer in which functional particles, etc. are dispersed well. Moreover, since functional particles, etc. can be dispersed well in a functional layer, it is possible to reduce internal resistance of an all-solid-state secondary battery and also to improve cycle characteristics of an all-solid-state secondary battery.
Note that the haze of the copolymer solution can be adjusted through the chemical composition (proportional contents of various repeating units) of the copolymer, the type of solvent, the weight-average molecular weight, the conditions in the production method of the copolymer, and so forth.
In the presently disclosed binder composition, it is particularly preferable that the copolymer and the solvent are a combination of: a copolymer (hereinafter, also referred to as "copolymer A") that includes a nitrile group-containing monomer unit, a conjugated diene monomer unit, an alkylene structural unit, and a C4-C9 (meth)acrylic acid ester monomer unit and in which the proportional content of the nitrile group-containing monomer unit is not less than 10 mass% and not more than 22 mass% when all repeating units in the copolymer are taken to be 100 mass%; and a solvent (hereinafter, also referred to as "solvent A") formed of any one of butyl butyrate, isobutyl isobutyrate, and octyl acetate because this makes it easy to satisfy the specific haze set forth above.
Moreover, when the copolymer and the solvent are a combination of the copolymer A and the solvent A, in addition to making it easy to satisfy the specific haze set forth above, it is also possible to particularly reduce internal resistance of an all-solid-state secondary battery while also imparting particularly good adhesiveness to a functional layer for an all-solid-state secondary battery.

<Production method of binder composition for all-solid-state secondary battery>

The binder composition can be produced by dissolving or dispersing the above-described copolymer in the solvent including the ester solvent having a carbon number of 6 or more. Specifically, the binder composition can be produced by mixing the above-described copolymer and solvent using a mixer such as a ball mill, a sand mill, a bead mill, a pigment disperser, a grinding machine, an ultrasonic disperser, a homogenizer, a planetary mixer, or a FILMIX.
Note that in a case in which the copolymer is produced in the form of a dispersion liquid of only another solvent, the presently disclosed binder composition is preferably obtained by performing solvent exchange. The solvent exchange can be performed by a commonly known method.

(Slurry composition for all-solid-state secondary battery)

The presently disclosed slurry composition for an all-solid-state secondary battery contains functional particles and the presently disclosed binder composition and may optionally further contain a conductive material and other additives. In other words, the presently disclosed slurry composition contains at least functional particles, the previously described copolymer, and a solvent including an ester solvent having a carbon number of 6 or more. Note that the solvent contained in the slurry composition may originate entirely from the binder composition or may be a solvent that was newly added to the slurry composition, separately to solvent originating from the binder composition.

Since the presently disclosed binder composition can reduce internal resistance of an all-solid-state secondary battery while also imparting excellent adhesiveness to a functional layer, the slurry composition containing this binder composition can also reduce internal resistance of an all-solid-state secondary battery while also imparting excellent adhesiveness to a functional layer.

<Functional particles>

The functional particles are particles that can impart a specific function to a layer formed using the slurry composition. The functional particles are preferably either or both of solid electrolyte particles and electrode active material particles. When the functional particles are either or both of solid electrolyte particles and electrode active material particles, it is possible to impart functionality as a solid electrolyte layer and/or electrode mixed material layer to a functional layer.

A slurry composition that can be used to form a solid electrolyte layer (hereinafter, also referred to as a "slurry composition for a solid electrolyte layer") contains solid electrolyte particles, but normally does not contain electrode active material particles, and preferably does not contain a conductive material.

Moreover, a slurry composition that can be used to form an electrode mixed material layer (hereinafter, also referred to as a "slurry composition for an electrode mixed material layer") contains electrode active material particles (positive electrode active material particles or negative electrode active material particles) and may optionally further contain solid electrolyte particles and a conductive material. More specifically, a slurry composition that can be used to form a positive electrode mixed material layer (hereinafter, also referred to as a "slurry composition for a positive electrode mixed material layer") contains positive electrode active material particles, a slurry composition that can be used to form a negative electrode mixed material layer (hereinafter, also referred to as a "slurry composition for a negative electrode mixed material layer") contains negative electrode active material particles, and these slurry compositions may optionally further contain solid electrolyte particles and a conductive material.

<<Solid electrolyte particles>>

The solid electrolyte particles are normally particles that have undergone a pulverization step and thus have a particulate form, but are normally irregularly shaped rather than perfectly spherical. The size of fine particles is typically measured by a method in which particles are irradiated with laser light and then scattered light is measured, for example. In this measurement, the particle diameter is a value that assumes that a single particle has a spherical shape. When multiple particles are measured together, the proportion of particles having a certain particle diameter can be expressed as a particle size distribution. Solid electrolyte particles forming a solid electrolyte layer are typically indicated as an average particle diameter using a value measured by this method.

The average particle diameter of the solid electrolyte particles is preferably not less than 0.3 μm and not more than 5.0 μm from a viewpoint of ion conduction resistance in a functional layer. Note that the average particle diameter of the solid electrolyte particles is the volume-average particle diameter and indicates the particle diameter (D50) at which, in a particle size distribution (by volume) measured by laser diffraction, cumulative volume calculated from a small diameter end of the distribution reaches 50%.

In the case of an all-solid-state lithium secondary battery, the solid electrolyte particles are not specifically limited so long as they display conductivity of lithium ions, but it is preferable that the solid electrolyte particles contain a crystalline inorganic lithium ion conductor or an amorphous inorganic lithium ion conductor.

Examples of crystalline inorganic lithium ion conductors include $Li_3N$, LISICON ($Li_{14}Zn(GeO_4)_4$), perovskite-type $Li_{0.5}La_{0.5}TiO_3$, LIPON ($Li_{3+y}PO_{4-x}N_x$), and Thio-LISICON ($Li_{3.25}Ge_{0.25}P_{0.75}S_4$).

The amorphous inorganic lithium ion conductor may be a material (sulfide solid electrolyte material) that includes S (sulfur atom) and displays ion conductivity. In a case in which an all-solid-state secondary battery obtained using the presently disclosed slurry composition is an all-solid-state lithium secondary battery, the sulfide solid electrolyte material that is used may be a sulfide solid electrolyte material obtained using a raw material composition containing $Li_2S$ and a

sulfide of an element belonging to any one of groups 13 to 15. The method by which the sulfide solid electrolyte material is synthesized using such a raw material composition may be an amorphization method, for example. The amorphization method may be mechanical milling or melt quenching, for example, of which, mechanical milling is preferable. This is because mechanical milling enables processing at normal temperature and simplification of the production process.

The element belonging to any one of groups 13 to 15 may be Al, Si, Ge, P, As, Sb, or the like, for example. Moreover, the sulfide of the element belonging to any one of groups 13 to 15 may, more specifically, be $Al_2S_3$, $SiS_2$, $GeS_2$, $P_2S_3$, $P_2S_5$, $As_2S_3$, $Sb_2S_3$, or the like. Of these sulfides, it is preferable to use a group 14 or 15 sulfide. In particular, the sulfide solid electrolyte material obtained using a raw material composition containing $Li_2S$ and a sulfide of an element belonging to any one of groups 13 to 15 is preferably a $Li_2S$-$P_2S_5$ material, a $Li_2S$-$SiS_2$ material, a $Li_2S$-$GeS_2$ material, or a $Li_2S$-$Al_2S_3$ material, and is more preferably a $Li_2S$-$P_2S_5$ material. This is because these materials have excellent Li ion conductivity.

Moreover, the sulfide solid electrolyte material preferably includes bridging sulfur. This is because the inclusion of bridging sulfur results in higher ion conductivity. Note that the "inclusion of bridging sulfur" can be judged by considering, for example, measurement results of Raman spectroscopy, the composition ratio of raw material, measurement results of NMR, or the like.

The mole fraction of $Li_2S$ in the $Li_2S$-$P_2S_5$ material or $Li_2S$-$Al_2S_3$ material may be within a range of not less than 50% and not more than 74% from a viewpoint of more reliably obtaining a sulfide solid electrolyte material including bridging sulfur, and is preferably within a range of not less than 60% and not more than 74%.

Furthermore, the sulfide solid electrolyte material may be sulfide glass or may be crystallized sulfide glass obtained through heat treatment of this sulfide glass. The sulfide glass can be obtained by an amorphization method such as previously described, for example. The crystallized sulfide glass can be obtained through heat treatment of sulfide glass, for example.

In particular, the sulfide solid electrolyte material is preferably crystallized sulfide glass represented by $Li_7P_3S_{11}$. This is due to the particularly good Li ion conductivity thereof. The method by which $Li_7P_3S_{11}$ is synthesized may, for example, be a method in which $Li_2S$ and $P_2S_5$ are mixed in a molar ratio of 70:30, are subjected to amorphization using a ball mill to synthesize sulfide glass, and then the obtained sulfide glass is heat treated at not lower than 150°C and not higher than 360°C to thereby synthesize $Li_7P_3S_{11}$.

The amorphous inorganic lithium ion conductor may alternatively be a material (oxide solid electrolyte material) that includes O (oxygen atom) and displays ion conductivity. The oxide solid electrolyte material may be $Li_3N$, LISICON ($Li_{14}Zn(GeO_4)_4$), a perovskite-type material (for example, $Li_{0.5}La_{0.5}TiO_3$), a garnet-type material (for example, $Li_7La_3Zr_2O_{12}$), LIPON ($Li_{3+y}PO_{4-x}N_x$), Thio-LISICON ($Li_{3.25}Ge_{0.25}P_{0.75}S_4$), or the like.

<<Electrode active material particles>>

The electrode active material particles are normally positive electrode active material particles or negative electrode active material particles. Positive electrode active material particles are particles that can be used in a slurry composition for a positive electrode mixed material layer, whereas negative electrode active material particles are particles that can be used in a slurry composition for a negative electrode mixed material layer.

[Positive electrode active material particles]

The positive electrode active material particles are particles that are formed of a positive electrode active material. In the case of an all-solid-state lithium secondary battery, the positive electrode active material is a compound that can occlude and release lithium ions. Positive electrode active materials are broadly classified as positive electrode active materials that are formed of inorganic compounds and positive electrode active materials that are formed of organic compounds.

The inorganic compound may be a transition metal oxide, a complex oxide of lithium and a transition metal, a transition metal sulfide, or the like. The transition metal may be Fe, Co, Ni, Mn, or the like. Specific examples of inorganic compounds include lithium-containing complex metal oxides such as $LiCoO_2$, $LiNiO_2$, $LiMnO_2$, $LiMn_2O_4$, $LiFePO_4$, and $LiFeVO_4$; transition metal sulfides such as $TiS_2$, $TiS_3$, and amorphous $MoS_2$; and transition metal oxides such as $Cu_2V_2O_3$, amorphous $V_2O$-$P_2O_5$, $MoO_3$, $V_2O_5$, and $V_6O_{13}$. These compounds may have undergone partial element substitution.

The organic compound may be a polyaniline, polypyrrole, polyacene, disulfide compound, polysulfide compound, N-fluoropyridinium salt, or the like, for example. The positive electrode active material may be a mixture of any of the above-described inorganic compounds and organic compounds.

The average particle diameter of the positive electrode active material is normally not less than 0.1 $\mu$m and not more than 50 $\mu$m, and preferably not less than 1 $\mu$m and not more than 20 $\mu$m from a viewpoint of improving battery characteristics such as load characteristics and cycle characteristics and from a viewpoint that an all-solid-state secondary battery having a large charge/discharge capacity can be obtained and that handling of the slurry composition and handling during positive electrode production are easy. Note that the average particle diameter can be determined through measurement of a particle size distribution by laser diffraction.

[Negative electrode active material particles]

The negative electrode active material particles are particles that are formed of a negative electrode active material. The negative electrode active material may be an allotrope of carbon such as graphite or coke. A negative electrode active material that is formed of an allotrope of carbon can be used in a mixed or coated form with a metal, metal salt, oxide, or the like. Other examples of negative electrode active materials that can be used include oxides and sulfates of silicon, tin, zinc, manganese, iron, nickel, and the like, metal lithium, lithium alloys such as Li-Al, Li-Bi-Cd, and Li-Sn-Cd, lithium transition metal nitrides, and silicon. In the case of a metal material, a metal foil or metal plate can be used in that form as an electrode, but the metal material may have a particulate form.

The average particle diameter of the negative electrode active material particles is normally not less than 1 $\mu$m and not more than 50 $\mu$m, and preferably not less than 15 $\mu$m and not more than 30 $\mu$m from a viewpoint of improving battery characteristics such as initial efficiency, load characteristics, and cycle characteristics.

<Conductive material>

The conductive material is normally a component that can be compounded in order to promote electrical contact among the functional particles in an electrode mixed material layer. Examples of conductive materials that may be used include conductive carbon materials such as carbon nanotubes, carbon black (for example, acetylene black, Ketjenblack® (Ketjenblack is a registered trademark in Japan, other countries, or both), and furnace black), graphite, carbon fibers other than carbon nanotubes, and carbon flake; and fibers, foils, etc. of various metals.

One of these conductive materials can be used individually, or two or more of these conductive materials can be used in combination.

<Other additives>

Examples of other additives that can be contained in the slurry composition include reinforcing materials, etc.

Various types of inorganic fillers and organic fillers having a spherical, plate-like, rod-like, or fibrous form can be used as reinforcing materials.

<Solid content concentration of slurry composition>

The solid content concentration of the slurry composition for an all-solid-state secondary battery is preferably 30 mass% or more, and more preferably 40 mass% or more, and is preferably 80 mass% or less, and more preferably 70 mass% or less.

When the solid content concentration of the slurry composition for an all-solid-state secondary battery is within any of the ranges set forth above, shedding of functional particles from a functional layer can be effectively inhibited without impairing battery reactions.

In the case of a slurry composition for a solid electrolyte layer, the solid content concentration is preferably 30 mass% or more, and more preferably 40 mass% or more, and is preferably 80 mass% or less, more preferably 70 mass% or less, and even more preferably 60 mass% or less.

When the solid content concentration of the slurry composition for a solid electrolyte layer is within any of the ranges set forth above, shedding of solid electrolyte particles from a solid electrolyte layer can be effectively inhibited without impairing battery reactions.

In the case of a slurry composition for a positive electrode mixed material layer, the solid content concentration is preferably 30 mass% or more, more preferably 40 mass% or more, and even more preferably 50 mass% or more, and is preferably 80 mass% or less, and more preferably 70 mass% or less.

When the solid content concentration of the slurry composition for a positive electrode mixed material layer is within any of the ranges set forth above, shedding of positive electrode active material particles and solid electrolyte particles from a positive electrode mixed material layer can be effectively inhibited without impairing battery reactions.

In the case of a slurry composition for a negative electrode mixed material layer, the solid content concentration is preferably 30 mass% or more, more preferably 40 mass% or more, and even more preferably 50 mass% or more, and is preferably 80 mass% or less, and more preferably 70 mass% or less.

When the solid content concentration of the slurry composition for a negative electrode mixed material layer is within any of the ranges set forth above, shedding of negative electrode active material particles and solid electrolyte particles from a negative electrode mixed material layer can be effectively inhibited without impairing battery reactions.

<Content and mass ratio of components>

The content of the copolymer in the slurry composition for an all-solid-state secondary battery when total solid content in the slurry composition for an all-solid-state secondary battery is taken to be 100 parts by mass is preferably 0.1 parts by mass or more, more preferably 0.3 parts by mass or more, and even more preferably 0.5 parts by mass or more, and is preferably 10 parts by mass or less, more preferably 5 parts by mass or less, and even more preferably 2 parts by mass or less.

When the content of the copolymer in the slurry composition for an all-solid-state secondary battery is within any of the ranges set forth above when total solid content in the slurry composition for an all-solid-state secondary battery is taken to be 100 parts by mass, shedding of functional particles from a functional layer can be effectively inhibited without impairing battery reactions.

The content of the copolymer in the slurry composition for a solid electrolyte layer when total solid content in the slurry composition for a solid electrolyte layer is taken to be 100 parts by mass is preferably 0.1 parts by mass or more, more preferably 0.3 parts by mass or more, and even more preferably 0.5 parts by mass or more, and is preferably 10 parts by mass or less, more preferably 3 parts by mass or less, and even more preferably 1.5 parts by mass or less.

When the content of the copolymer in the slurry composition for a solid electrolyte layer is within any of the ranges set forth above when total solid content in the slurry composition for a solid electrolyte layer is taken to be 100 parts by mass, shedding of solid electrolyte particles from a solid electrolyte layer can be effectively inhibited without impairing battery reactions.

The content of the copolymer in the slurry composition for a positive electrode mixed material layer when total solid content in the slurry composition for a positive electrode mixed material layer is taken to be 100 parts by mass is preferably 0.1 parts by mass or more, more preferably 0.3 parts by mass or more, and even more preferably 0.5 parts by mass or more, and is preferably 10 parts by mass or less, more preferably 3 parts by mass or less, and even more preferably 1.5 parts by mass or less.

When the content of the copolymer in the slurry composition for a positive electrode mixed material layer is within any of the ranges set forth above when total solid content in the slurry composition for a positive electrode mixed material layer is taken to be 100 parts by mass, shedding of positive electrode active material particles and solid electrolyte particles from a positive electrode mixed material layer can be effectively inhibited without impairing battery reactions.

The content of the copolymer in the slurry composition for a negative electrode mixed material layer when total solid content in the slurry composition for a negative electrode mixed material layer is taken to be 100 parts by mass is preferably 0.1 parts by mass or more, more preferably 0.5 parts by mass or more, and even more preferably 1 part by mass or more, and is preferably 10 parts by mass or less, more preferably 5 parts by mass or less, and even more preferably 2 parts by mass or less.

When the content of the copolymer in the slurry composition for a negative electrode mixed material layer is within any of the ranges set forth above when total solid content in the slurry composition for a negative electrode mixed material layer is taken to be 100 parts by mass, shedding of negative electrode active material particles and solid electrolyte particles from a negative electrode mixed material layer can be effectively inhibited without impairing battery reactions.

The content of all functional particles in the slurry composition for an all-solid-state secondary battery when total solid content in the slurry composition for an all-solid-state secondary battery is taken to be 100 parts by mass is preferably 80 parts by mass or more, more preferably 90 parts by mass or more, and even more preferably 95 parts by mass or more, and is preferably 99.5 parts by mass or less, and more preferably 99 parts by mass or less.

The content of solid electrolyte particles in the slurry composition for a solid electrolyte layer when total solid content in the slurry composition for a solid electrolyte layer is taken to be 100 parts by mass is preferably 80 parts by mass or more, more preferably 95 parts by mass or more, and even more preferably 97 parts by mass or more, and is preferably 99.5 parts by mass or less, and more preferably 99 parts by mass or less.

The content of positive electrode active material particles and solid electrolyte particles in the slurry composition for a positive electrode mixed material layer when total solid content in the slurry composition for a positive electrode mixed material layer is taken to be 100 parts by mass is preferably 80 parts by mass or more, more preferably 90 parts by mass or more, and even more preferably 95 parts by mass or more, and is preferably 99.5 parts by mass or less, and more preferably 98 parts by mass or less.

The mass ratio of the positive electrode active material particles and the solid electrolyte particles is preferably 90:10 to 50:50 (positive electrode active material particles:solid electrolyte particles), and more preferably 60:40 to 80:20 (positive electrode active material particles:solid electrolyte particles).

When the mass ratio of the positive electrode active material particles is within any of the ranges set forth above, it is possible to inhibit a phenomenon in which the mass of the positive electrode active material particles in a battery decreases due to the mass ratio of the positive electrode active material particles being too small, ultimately leading to reduction of battery capacity. It is also possible to inhibit a phenomenon in which electrical conductivity cannot be sufficiently obtained and the positive electrode active material particles cannot be effectively used due to the mass ratio of the solid electrolyte particles being too small, ultimately leading to reduction of battery capacity.

The content of negative electrode active material particles and solid electrolyte particles in the slurry composition for a negative electrode mixed material layer when total solid content in the slurry composition for a negative electrode mixed material layer is taken to be 100 parts by mass is preferably 80 parts by mass or more, more preferably 90 parts by mass or more, and even more preferably 95 parts by mass or more, and is preferably 99.5 parts by mass or less, and more preferably 98 parts by mass or less.

The mass ratio of the negative electrode active material particles and the solid electrolyte particles is preferably 90:10 to 50:50 (negative electrode active material particles:solid electrolyte particles), and more preferably 60:40 to 80:20 (negative electrode active material particles:solid electrolyte particles).

When the mass ratio of the negative electrode active material particles is within any of the ranges set forth above, it is possible to inhibit a phenomenon in which the mass of the negative electrode active material particles in a battery decreases due to the mass ratio of the negative electrode active material particles being too small, ultimately leading to reduction of battery capacity. It is also possible to inhibit a phenomenon in which electrical conductivity cannot be sufficiently obtained and the negative electrode active material particles cannot be effectively used due to the mass ratio of the solid electrolyte particles being too small, ultimately leading to reduction of battery capacity.

The content of a conductive material in the slurry composition for an all-solid-state secondary battery when total solid content in the slurry composition for an all-solid-state secondary battery is taken to be 100 parts by mass is preferably 0.5 parts by mass or more, more preferably 1 part by mass or more, and even more preferably 1.5 parts by mass or more, and is preferably 10 parts by mass or less, more preferably 5 parts by mass or less, and even more preferably 2.5 parts by mass or less.

<Production method of slurry composition for all-solid-state secondary battery>

The slurry composition set forth above can be produced by dissolving or dispersing the above-described components in a solvent including an ester solvent having a carbon number of 6 or more. For example, the slurry composition is preferably produced by adding the functional particles and optionally adding an additional solvent including an ester solvent having a carbon number of 6 or more, a conductive material, other additives, and so forth to the previously described binder composition, and performing mixing by a known method such as previously described.

(Functional layer for all-solid-state secondary battery)

The presently disclosed functional layer for an all-solid-state secondary battery is a layer that has been formed using the presently disclosed slurry composition for a secondary battery. In other words, the functional layer for an all-solid-state secondary battery contains at least a copolymer and functional particles. Note that components contained in the functional layer are components (solid content) that were contained in the slurry composition set forth above and that the preferred ratio of the components is the same as the preferred ratio of the components (solid content) in the slurry composition.

Since the presently disclosed slurry composition can reduce internal resistance of an all-solid-state secondary battery while also imparting excellent adhesiveness to a functional layer, the functional layer that has been formed using this slurry composition can reduce internal resistance of an all-solid-state secondary battery while also displaying excellent adhesiveness.

In a case in which the functional layer is a solid electrolyte layer, the solid electrolyte layer contains a copolymer and solid electrolyte particles, but normally does not contain electrode active material particles, and preferably does not contain a conductive material.

Moreover, in a case in which the functional layer is a positive electrode mixed material layer, the positive electrode mixed material layer contains a copolymer and positive electrode active material particles and may optionally further contain solid electrolyte particles and a conductive material.

Furthermore, in a case in which the functional layer is a negative electrode mixed material layer, the negative electrode mixed material layer contains a copolymer and negative electrode active material particles and may optionally further contain solid electrolyte particles and a conductive material.

The thickness of the functional layer is not specifically limited but is preferably 20 μm or more, more preferably 40 μm or more, and even more preferably 70 μm or more, and is preferably 200 μm or less, more preferably 150 μm or less, and even more preferably 100 μm or less.

In a case in which the functional layer is a solid electrolyte layer, the thickness of the solid electrolyte layer is not specifically limited but is preferably 20 μm or more, more preferably 40 μm or more, and even more preferably 70 μm or more, and is preferably 200 μm or less.

In a case in which the functional layer is a positive electrode mixed material layer, the thickness of the positive electrode mixed material layer is not specifically limited but is preferably 20 μm or more, and more preferably 40 μm or

more, and is preferably 200 μm or less, and more preferably 100 μm or less.

In a case in which the functional layer is a negative electrode mixed material layer, the thickness of the negative electrode mixed material layer is not specifically limited but is preferably 20 μm or more, more preferably 40 μm or more, and even more preferably 70 μm or more, and is preferably 200 μm or less, and more preferably 150 μm or less.

<Formation method of functional layer for all-solid-state secondary battery>

The functional layer can be formed on a substrate, for example, using the presently disclosed slurry composition. The substrate may be a current collector, an electrode, or the like, for example.

Examples of methods by which the functional layer may be formed on the substrate using the slurry composition include, but are not specifically limited to:

(A) a method in which the slurry composition is applied onto the surface of the substrate and is then dried; and
(B) a method in which the slurry composition is applied onto a releasable substrate and is dried to form a functional layer that is subsequently transferred onto the substrate.

A known releasable substrate such as an imide film can be used as the releasable substrate without any specific limitations.

Examples of methods by which the slurry composition can be applied onto the substrate or the releasable substrate include, but are not specifically limited to, doctor blading, reverse roll coating, direct roll coating, gravure coating, extrusion coating, and brush coating.

The slurry composition on the substrate or the releasable substrate can be dried by any commonly known method without any specific limitations. Examples of drying methods that can be used include drying by warm, hot, or low-humidity air; drying in a vacuum; and drying by irradiation with infrared light, electron beams, or the like. Although no specific limitations are placed on the drying conditions, the drying temperature is preferably 50°C to 150°C, and the drying time is preferably 1 minute to 90 minutes.

(All-solid-state secondary battery)

The presently disclosed all-solid-state secondary battery includes the presently disclosed functional layer for an all-solid-state secondary battery. Specifically, the presently disclosed all-solid-state secondary battery includes a positive electrode including a positive electrode mixed material layer on a current collector, a negative electrode including a negative electrode mixed material layer on a current collector, and a solid electrolyte layer located between the positive electrode mixed material layer and the negative electrode mixed material layer, wherein at least one layer, and preferably every layer among the positive electrode mixed material layer, the negative electrode mixed material layer, and the solid electrolyte layer is the presently disclosed functional layer.

With the all-solid-state secondary battery set forth above, it is possible to obtain an all-solid-state secondary battery having reduced internal resistance while also having strong adhesion between battery materials.

<Solid electrolyte layer>

Description of the chemical composition of the solid electrolyte layer is omitted here since it was previously described in the "Functional layer for all-solid-state secondary battery" section. Note that in a case in which the positive electrode mixed material layer and/or the negative electrode mixed material layer is formed using the presently disclosed slurry composition, a commonly known solid electrolyte layer may be used as the solid electrolyte layer.

<Positive electrode mixed material layer>

Description of the chemical composition of the positive electrode mixed material layer is omitted here since it was previously described in the "Functional layer for all-solid-state secondary battery" section. Note that in a case in which the solid electrolyte layer and/or the negative electrode mixed material layer is formed using the presently disclosed slurry composition, a commonly known positive electrode mixed material layer may be used as the positive electrode mixed material layer.

<Negative electrode mixed material layer>

Description of the chemical composition of the negative electrode mixed material layer is omitted here since it was previously described in the "Functional layer for all-solid-state secondary battery" section. Note that in a case in which the solid electrolyte layer and/or the positive electrode mixed material layer is formed using the presently disclosed slurry composition, a commonly known negative electrode mixed material layer may be used as the negative electrode mixed material layer.

<Current collector>

Any material having electrical conductivity and electrochemical durability may be used as a current collector without any specific limitations. For example, a metal material such as iron, copper, aluminum, nickel, stainless steel, titanium, tantalum, gold, or platinum is preferable from a viewpoint of having heat resistance. Of these materials, aluminum is particularly preferable for the positive electrode, whereas copper is particularly preferable for the negative electrode. Although no specific limitations are placed on the shape of the current collector, a sheet shape of approximately 0.001 mm to 0.5 mm in thickness is preferable. The current collector is preferably subjected to surface roughening in advance in order to increase adhesive strength with the previously described positive/negative mixed material layer. The method of surface roughening may, for example, be a mechanical polishing method, an electrolytic polishing method, or a chemical polishing method. The mechanical polishing is performed, for example, using a coated abrasive to which abrasive grains are bonded, a whetstone, an emery wheel, or a wire brush including steel wire or the like.

<Thicknesses of layers>

The thickness of the functional layer in the all-solid-state secondary battery is not specifically limited but is preferably 16 μm or more, more preferably 32 μm or more, and even more preferably 56 μm or more, and is preferably 160 μm or less, more preferably 120 μm or less, and even more preferably 80 μm or less.
The thickness of the solid electrolyte layer in the all-solid-state secondary battery is not specifically limited but is preferably 16 μm or more, more preferably 32 μm or more, and even more preferably 56 μm or more, and is preferably 160 μm or less.
The thickness of the positive electrode mixed material layer in the all-solid-state secondary battery is not specifically limited but is preferably 16 μm or more, and more preferably 32 μm or more, and is preferably 160 μm or less, and more preferably 80 μm or less.
The thickness of the negative electrode mixed material layer in the all-solid-state secondary battery is not specifically limited but is preferably 16 μm or more, more preferably 32 μm or more, and even more preferably 56 μm or more, and is preferably 160 μm or less, and more preferably 120 μm or less.

<Production method of all-solid-state secondary battery>

The all-solid-state battery can be produced by producing the positive electrode, the negative electrode, and the solid electrolyte layer by any method and in any order without any specific limitations.
Specifically, the all-solid-state battery can be produced by any of the following methods (a) to (d), for example.

(a) A method in which a laminate having a stacking order of positive electrode mixed material layer/solid electrolyte layer/negative electrode mixed material layer is produced and then current collectors are affixed to both sides of the laminate
(b) A method in which the positive electrode, the negative electrode, and the solid electrolyte layer are separately produced and are then affixed
(c) A method in which the solid electrolyte layer is formed on one of the electrodes to produce a solid electrolyte layer-equipped electrode that is subsequently affixed to the other electrode
(d) A method in which a laminate having a stacking order of positive electrode mixed material layer/solid electrolyte layer/negative electrode mixed material layer is produced on one current collector and is subsequently affixed to the other current collector

Note that a pressing process may be performed in production of a laminate, production of a solid electrolyte layer-equipped electrode, and affixing of layers and current collectors in methods (a) to (d). The pressure in the pressing process is preferably 100 MPa or more, more preferably 200 MPa or more, and even more preferably 300 MPa or more, and is preferably 700 MPa or less, more preferably 600 MPa or less, and even more preferably 500 MPa or less.
A device of the all-solid-state secondary battery that is obtained in this manner is placed in a battery container in that form or after rolling, folding, or the like in accordance with the battery shape, and the battery container is sealed to thereby obtain the all-solid-state secondary battery. Moreover, an expanded metal, an overcurrent preventing device such as a fuse or a PTC device, a lead plate, or the like can be placed in the battery container, as necessary, in order to prevent pressure increase inside the battery and occurrence of overcharging or overdischarging. The shape of the battery may be a coin type, a button type, a sheet type, a cylinder type, a prismatic type, a flat type, or the like.

## EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a copolymer that is produced through copolymerization of a plurality of types of monomers, the proportion in the copolymer constituted by a monomer unit formed through polymerization of a given monomer is normally, unless otherwise specified, the same as the ratio (charging ratio) of the given monomer among all monomers used in polymerization of the copolymer. Furthermore, in a case in which the copolymer is a hydrogenated copolymer obtained through hydrogenation of a copolymerized product including conjugated diene monomer units, the total proportional content of non-hydrogenated conjugated diene monomer units and alkylene structural units that are hydrogenated conjugated diene monomer units in the hydrogenated copolymer is the same as the ratio (charging ratio) of a conjugated diene monomer among all monomers used in polymerization of the copolymerized product.

Various measurements and evaluations in the examples and comparative examples were performed by the following methods.

<Chemical composition of copolymer>

After coagulating 100 g of a copolymer solution (binder composition) obtained in each example or comparative example in 1 L of methanol, 12 hours of vacuum drying was performed at a temperature of 60°C. The resultant dry copolymer was analyzed by $^{1}$H-NMR. The proportional content (mass%) of each type of monomer unit and structural unit included in the copolymer was calculated based on the obtained analysis values.

<Weight-average molecular weight and molecular weight distribution of copolymer>

The weight-average molecular weight (Mw) of a copolymer was measured by gel permeation chromatography (GPC) under the following measurement conditions using a LiBr-DMF solution of 10 mM in concentration. In addition, the number-average molecular weight (Mn) of the copolymer was measured by the same method, and the molecular weight distribution (Mw/Mn) of the copolymer was calculated.

- Separation column: Shodex KD-806M (produced by Showa Denko K.K.)
- Detector: Differential refractometer RID-10A (produced by Shimadzu Corporation)
- Eluent flow rate: 0.3 mL/min
- Column temperature: 40°C
- Standard polymer: TSK standard polystyrene (produced by Tosoh Corporation)

<THF-insoluble fraction of copolymer>

A copolymer solution (binder composition) obtained in each example or comparative example was dried in an environment of 23°C to 25°C having a humidity of 50% to produce a film having a thickness of 3 ± 0.3 mm. Next, the produced film was cut to 5 mm-square to prepare film pieces. Approximately 1 g of these film pieces were precisely weighed, and the weight of the precisely weighed film pieces was taken to be W0. The precisely weighed film pieces were then immersed in 100 g of THF (temperature 25°C) for 24 hours. After 24 hours of immersion, the film pieces were pulled out of the THF, the pulled out film pieces were vacuum dried at 105°C for 3 hours, and the weight thereof (weight of insoluble content) W1 was precisely weighed. The THF-insoluble fraction (%) was calculated according to the following formula.

$$\text{THF-insoluble fraction (\%)} = \text{W1/W0} \times 100$$

<Iodine value of copolymer>

After coagulating 100 g of a copolymer solution (binder composition) obtained in each example or comparative example in 1 L of methanol, 12 hours of vacuum drying was performed at a temperature of 60°C. The iodine value of the resultant dry copolymer was measured in accordance with JIS K6235(2006).

<Haze of copolymer solution (binder composition)>

A copolymer solution (binder composition) obtained in each example or comparative example was adjusted to a copolymer concentration of 8 mass% through further addition of the solvent that was used in production of the copolymer solution (solvent of the binder composition). Note that in a case in which the copolymer concentration in the copolymer solution is less than 8 mass%, the copolymer concentration is adjusted through evaporation of solvent, for example. Moreover, in a case in which the solvent used in production of the copolymer differs from the solvent of the binder composition, solvent exchange or the like is performed.

Using a haze meter (product name: NDH7000SP; produced by Nippon Denshoku Industries Co., Ltd.; device in accordance with JIS K 7136:2000) and under conditions of 25°C, the solvent used in production of the copolymer solution was loaded into a glass cell for liquid measurement in order to perform standard calibration, and then the copolymer solution having a concentration of 8 mass% that was obtained as described above was loaded into a glass cell in order to measure the haze of this copolymer solution.

<Adhesiveness of positive electrode mixed material layer>

A rectangle of 1.0 cm in width by 10 cm in length was cut out from a positive electrode obtained in each example or comparative example as a test specimen. Cellophane tape (tape prescribed by JIS Z1522) was affixed to the surface at the positive electrode mixed material layer-side of the test specimen, the cellophane tape was subsequently peeled off in a direction at 180° from one end of the test specimen at a speed of 50 mm/min, and the stress during this peeling was measured. A total of three measurements were made in this manner. An average value of these measurements was determined, was taken to be the peel strength (N/m), and was evaluated by the following standard. A larger peel strength indicates that the positive electrode mixed material layer has better adhesiveness and is adhered more strongly to a current collector.

A+: Peel strength of 3 N/m or more
A: Peel strength of not less than 2 N/m and less than 3 N/m
B: Peel strength of not less than 1.5 N/m and less than 2 N/m
C: Peel strength of not less than 1.5 N/m and less than 1 N/m
D: Peel strength of less than 1 N/m

<Adhesiveness of negative electrode mixed material layer>

A rectangle of 1.0 cm in width by 10 cm in length was cut out from a negative electrode obtained in each example or comparative example as a test specimen. Cellophane tape (tape prescribed by JIS Z1522) was affixed to the surface at the negative electrode mixed material layer-side of the test specimen, the cellophane tape was subsequently peeled off in a direction at 180° from one end of the test specimen at a speed of 50 mm/min, and the stress during this peeling was measured. A total of three measurements were made in this manner. An average value of these measurements was determined, was taken to be the peel strength (N/m), and was evaluated by the following standard. A larger peel strength indicates that the negative electrode mixed material layer has better adhesiveness and is adhered more strongly to a current collector.

A+: Peel strength of 5 N/m or more
A: Peel strength of not less than 4 N/m and less than 5 N/m
B: Peel strength of not less than 3 N/m and less than 4 N/m
C: Peel strength of not less than 2 N/m and less than 3 N/m
D: Peel strength of less than 2 N/m

<IV resistance of all-solid-state secondary battery>

An all-solid-state secondary battery obtained in each example or comparative example was charged to an SOC (State Of Charge) of 50% at 1C (C is a value expressed by rated capacity (mA)/1 h (hours)) in a 25°C atmosphere. The all-solid-state secondary battery was subsequently subjected to 30 seconds of charging and 30 seconds of discharging at each of 0.1C, 0.2C, 0.5C, 1C, and 2C centered on an SOC of 50%. The battery voltage after 10 seconds at the discharging side was plotted against the current value, and the gradient of this plot was determined as the IV resistance (Ω) (IV resistance during discharging). The obtained IV resistance value (Ω) was evaluated by the following standard. A smaller value for IV resistance indicates that the all-solid-state secondary battery has lower internal resistance.

A: IV resistance of 80 Ω or less
B: IV resistance of more than 80 Ω and not more than 90 Ω
C: IV resistance of more than 90 Ω and not more than 100 Ω
D: IV resistance of more than 100 Ω

<Cycle characteristics of all-solid-state secondary battery>

An all-solid-state secondary battery obtained in each example or comparative example was subjected to 50 charge/discharge cycles at 25°C in which the all-solid-state secondary battery was charged from 3 V to 4.2 V at 0.2C and then discharged from 4.2 V to 3 V at 0.2C. A value determined by calculating the 0.2C discharge capacity of the 50$^{th}$ cycle as a percentage relative to the 0.2C discharge capacity of the 1$^{st}$ cycle was taken to be a capacity maintenance rate and was evaluated by the following standard. A larger value for the capacity maintenance rate indicates that there is less reduction of discharge capacity and that the all-solid-state secondary battery has better cycle characteristics.

A: Capacity maintenance rate of 90% or more
B: Capacity maintenance rate of not less than 80% and less than 90%
C: Capacity maintenance rate of not less than 70% and less than 80%
D: Capacity maintenance rate of less than 70%

(Example 1)

<Production of copolymer solution (binder composition)>

A reactor was charged with 200 parts of deionized water, 2.5 parts of sodium dodecyl diphenyl ether sulfonate as an emulsifier, a composition containing 18 parts of acrylonitrile (nitrile group-containing monomer), 42 parts of 1,3-butadiene (conjugated diene monomer), 35 parts of n-butyl acrylate (C4-C9 (meth)acrylic acid ester monomer), and 5 parts of 1,4-cyclohexanedimethanol monoacrylate (hydrophilic group-containing monomer) as a monomer composition, and 0.2 parts of t-dodecyl mercaptan as a molecular weight modifier. Next, 0.06 parts of cumene hydroperoxide and 0.025 parts of ferrous sulfate were added as a redox polymerization initiator including an iron-based compound, and emulsion polymerization of the monomer composition was initiated at 10°C. At the point at which the polymerization conversion rate reached 80%, 0.2 parts of hydroxylamine sulfate was added per 100 parts of the monomer composition to stop the polymerization.

After the polymerization had stopped, the resultant product was heated and was subjected to steam distillation at 80°C under reduced pressure to remove unreacted monomer. Next, 2 parts of an alkylated phenol was added as an antioxidant to the liquid residue to obtain a copolymer latex (water dispersion of a particulate pre-hydrogenation copolymer).

A 10% aqueous solution of 0.6 parts of aluminum sulfate (coagulant) was added under stirring relative to 100 parts of copolymer solid content in the obtained water dispersion so as to cause coagulation of the copolymer in the water dispersion. The resultant was subsequently filtered to obtain a filtration residue that was then water washed through passing of 50 times the amount of deionized water to yield a pre-hydrogenation copolymer.

Next, oil-layer hydrogenation was adopted as a hydrogenation method to perform hydrogenation of the pre-hydrogenation copolymer. Specifically, the pre-hydrogenation copolymer was first dissolved with a concentration of 10% in acetone to obtain an acetone solution of a hydrogenation subject (pre-hydrogenation copolymer). This solution was loaded into an autoclave, and then 500 mass ppm of a palladium/silica catalyst was added to the solution relative to 100% of the hydrogenation subject. Thereafter, contents (solution) in the autoclave were heated to 50°C in a state in which the pressure was raised to 3 MPa with hydrogen gas. This temperature was maintained for 6 hours to perform a hydrogenation reaction of the pre-hydrogenation copolymer and thereby yield a hydrogenation reaction product. Once the hydrogenation reaction was complete, the palladium/silica catalyst was filtered off to obtain the target copolymer (acetone solution).

Next, an appropriate amount of isobutyl isobutyrate was added to the obtained acetone solution of the copolymer to yield a mixture. Thereafter, vacuum distillation was performed at 80°C so as to remove acetone and excess isobutyl isobutyrate and perform solvent exchange from acetone to isobutyl isobutyrate, thereby yielding an isobutyl isobutyrate solution (binder composition) of the copolymer having a solid content concentration of 10% as a copolymer solution. The obtained copolymer solution (binder composition) was used to measure the chemical composition of the copolymer, the weight-average molecular weight and molecular weight distribution of the copolymer, the THF-insoluble fraction of the copolymer, the iodine value of the copolymer, and the haze of a copolymer solution. The results are shown in Table 1.

<Production of slurry composition for positive electrode mixed material layer>

After mixing 72 parts of lithium cobalt oxide (number-average particle diameter: 11.5 μm) as positive electrode active material particles, 24.9 parts of sulfide glass formed of $Li_2S$ and $P_2S_5$ ($Li_2S/P_2S_5$ = 70 mol%/30 mol%; number-average particle diameter: 0.9 μm) as inorganic solid electrolyte particles, 2.5 parts of acetylene black as a conductive material, and 0.6 parts (in terms of solid content) of the binder composition obtained as described above and then further adding isobutyl isobutyrate as a solvent so as to adjust the solid content concentration to 80%, these materials were mixed for 60 minutes in a planetary mixer. Isobutyl isobutyrate was subsequently further added so as to adjust the solid content concentration to 60%, and then 10 minutes of mixing was performed to produce a slurry composition for a positive electrode mixed material layer.

<Production of slurry composition for negative electrode mixed material layer>

After mixing 65 parts of graphite (number-average particle diameter: 20 μm) as negative electrode active material particles, 32 parts of sulfide glass formed of $Li_2S$ and $P_2S_5$ ($Li_2S/P_2S_5$ = 70 mol%/30 mol%; number-average particle diameter: 0.9 μm) as inorganic solid electrolyte particles, 1.5 parts of acetylene black as a conductive material, and 1.5 parts (in terms of solid content) of the binder composition obtained as described above and then further adding isobutyl isobutyrate as a solvent so as to adjust the solid content concentration to 65%, these materials were mixed for 60 minutes in a planetary mixer. Isobutyl isobutyrate was subsequently further added so as to adjust the solid content concentration to 60%, and then mixing was performed in the planetary mixer to produce a slurry composition for a negative electrode mixed material layer.

<Production of slurry composition for solid electrolyte layer>

After mixing 99.0 parts of sulfide glass formed of $Li_2S$ and $P_2S_5$ ($Li_2S/P_2S_5$ = 70 mol%/30 mol%; number-average particle diameter: 0.9 μm) as inorganic solid electrolyte particles and 1.0 parts (in terms of solid content) of the binder composition obtained as described above in a glovebox under an argon gas atmosphere (moisture concentration: 0.6 ppm; oxygen concentration: 1.8 ppm) and then further adding isobutyl isobutyrate as a solvent so as to adjust the solid content concentration to 60%, these materials were mixed for 60 minutes in a planetary mixer. Isobutyl isobutyrate was subsequently further added so as to adjust the solid content concentration to 50%, and then mixing was performed in the planetary mixer to produce a slurry composition for a solid electrolyte layer.

<Production of positive electrode>

The slurry composition for a positive electrode mixed material layer was applied onto the surface of a current collector (aluminum foil; thickness: 20 μm) and was dried (60 minutes at temperature of 120°C) so as to form a positive electrode mixed material layer of 75 μm in thickness, and thereby obtain a positive electrode. The obtained positive electrode was used to evaluate adhesiveness of the positive electrode mixed material layer. The result is shown in Table 1.

<Production of negative electrode>

The slurry composition for a negative electrode mixed material layer was applied onto the surface of a current collector (copper foil; thickness: 15 μm) and was dried (60 minutes at temperature of 120°C) to form a negative electrode mixed material layer of 90 μm in thickness, and thereby obtain a negative electrode. The obtained negative electrode was used to evaluate adhesiveness of the negative electrode mixed material layer. The result is shown in Table 1.

<Production of all-solid-state secondary battery>

The slurry composition for a solid electrolyte layer was applied onto imide film (thickness: 25 μm) and was dried (60 minutes at temperature of 120°C) to form a solid electrolyte layer of 150 μm in thickness. The solid electrolyte layer on the imide film and the positive electrode were affixed with the solid electrolyte layer and the positive electrode mixed material layer in contact with each other, a pressing process was performed such that 400 MPa of pressure (pressing pressure) was applied, and the solid electrolyte layer was transferred onto the positive electrode mixed material layer from the imide film to thereby obtain a solid electrolyte layer-equipped positive electrode.

The solid electrolyte layer-equipped positive electrode and the negative electrode were affixed with the solid electrolyte layer of the solid electrolyte layer-equipped positive electrode and the negative electrode mixed material layer of the negative electrode in contact with each other, and a pressing process was performed such that 400 MPa of pressure (pressing pressure) was applied to the solid electrolyte layer of the solid electrolyte layer-equipped positive electrode to thereby obtain an all-solid-state secondary battery (stacking order: aluminum foil/positive electrode mixed material layer/solid electrolyte layer/negative electrode mixed material layer/copper foil). The thickness of the solid electrolyte layer in the all-solid-state secondary battery after pressing was 120 $\mu$m. IV resistance and cycle characteristics were evaluated for this all-solid-state secondary battery. The results are shown in Table 1.

(Example 2)

Various operations, measurements, and evaluations were performed in the same way as in Example 1 with the exception that in production of the copolymer solution (binder composition), a composition containing 18 parts of acrylonitrile (nitrile group-containing monomer), 44 parts of 1,3-butadiene (conjugated diene monomer), 35 parts of n-butyl acrylate (C4-C9 (meth)acrylic acid ester monomer), and 3 parts of 2-hydroxyethyl methacrylate (hydrophilic group-containing monomer) was used as a monomer composition. The results are shown in Table 1.

(Example 3)

Various operations, measurements, and evaluations were performed in the same way as in Example 1 with the exception that in production of the copolymer solution (binder composition), a composition containing 15 parts of acrylonitrile (nitrile group-containing monomer), 40 parts of 1,3-butadiene (conjugated diene monomer), 30 parts of n-butyl acrylate (C4-C9 (meth)acrylic acid ester monomer), 5 parts of 1,4-cyclohexanedimethanol monoacrylate (hydrophilic group-containing monomer), and 10 parts of styrene (aromatic vinyl monomer) was used as a monomer composition. The results are shown in Table 1.

(Example 4)

Various operations, measurements, and evaluations were performed in the same way as in Example 1 with the exception that butyl butyrate was used instead of isobutyl isobutyrate in production of the copolymer solution (binder composition), in production of the slurry composition for a positive electrode mixed material layer, in production of the slurry composition for a negative electrode mixed material layer, and in production of the slurry composition for a solid electrolyte layer. The results are shown in Table 1.

(Example 5)

Various operations, measurements, and evaluations were performed in the same way as in Example 1 with the exception that in production of the copolymer solution (binder composition), a composition containing 13 parts of acrylonitrile (nitrile group-containing monomer), 47 parts of 1,3-butadiene (conjugated diene monomer), 35 parts of n-butyl acrylate (C4-C9 (meth)acrylic acid ester monomer), and 5 parts of 1,4-cyclohexanedimethanol monoacrylate (hydrophilic group-containing monomer) was used as a monomer composition. The results are shown in Table 1.

(Example 6)

Various operations, measurements, and evaluations were performed in the same way as in Example 1 with the exception that in production of the copolymer solution (binder composition), a composition containing 21 parts of acrylonitrile (nitrile group-containing monomer), 39 parts of 1,3-butadiene (conjugated diene monomer), 35 parts of n-butyl acrylate (C4-C9 (meth)acrylic acid ester monomer), and 5 parts of 1,4-cyclohexanedimethanol monoacrylate (hydrophilic group-containing monomer) was used as a monomer composition. The results are shown in Table 1.

(Example 7)

Various operations, measurements, and evaluations were performed in the same way as in Example 1 with the exception that in production of the copolymer solution (binder composition), the polymerization temperature of emulsion polymerization was changed from 10°C to 8°C. The results are shown in Table 1.

(Example 8)

Various operations, measurements, and evaluations were performed in the same way as in Example 1 with the exception that in production of the copolymer solution (binder composition), the polymerization temperature of emulsion polymerization was changed from 10°C to 15°C. The results are shown in Table 1.

(Example 9)

Various operations, measurements, and evaluations were performed in the same way as in Example 1 with the exception that octyl acetate was used instead of isobutyl isobutyrate in production of the copolymer solution (binder composition), in production of the slurry composition for a positive electrode mixed material layer, in production of the slurry composition for a negative electrode mixed material layer, and in production of the slurry composition for a solid electrolyte layer. The results are shown in Table 1.

(Example 10)

Various operations, measurements, and evaluations were performed in the same way as in Example 1 with the exception that in production of the copolymer solution (binder composition), a composition containing 18 parts of acrylonitrile (nitrile group-containing monomer), 32 parts of 1,3-butadiene (conjugated diene monomer), 45 parts of n-butyl acrylate (C4-C9 (meth)acrylic acid ester monomer), and 5 parts of 1,4-cyclohexanedimethanol monoacrylate (hydrophilic group-containing monomer) was used as a monomer composition. The results are shown in Table 1.

(Example 11)

Various operations, measurements, and evaluations were performed in the same way as in Example 1 with the exception that in production of the copolymer solution (binder composition), a composition containing 18 parts of acrylonitrile (nitrile group-containing monomer), 52 parts of 1,3-butadiene (conjugated diene monomer), 25 parts of n-butyl acrylate (C4-C9 (meth)acrylic acid ester monomer), and 5 parts of 1,4-cyclohexanedimethanol monoacrylate (hydrophilic group-containing monomer) was used as a monomer composition. The results are shown in Table 1.

(Example 12)

Various operations, measurements, and evaluations were performed in the same way as in Example 1 with the exception that in production of the copolymer solution (binder composition), the used amount of palladium/silica catalyst was changed from 500 mass ppm to 200 mass ppm. The results are shown in Table 1.

(Example 13)

Various operations, measurements, and evaluations were performed in the same way as in Example 1 with the exception that in production of the copolymer solution (binder composition), the used amount of palladium/silica catalyst was changed from 500 mass ppm to 2,000 mass ppm. The results are shown in Table 1.

(Example 14)

Various operations, measurements, and evaluations were performed in the same way as in Example 1 with the exception that in production of the copolymer solution (binder composition), a composition containing 17 parts of acrylonitrile (nitrile group-containing monomer), 48 parts of 1,3-butadiene (conjugated diene monomer), and 35 parts of n-butyl acrylate (C4-C9 (meth)acrylic acid ester monomer) was used as a monomer composition. The results are shown in Table 1.

(Example 15)

Various operations, measurements, and evaluations were performed in the same way as in Example 1 with the exception that in production of the copolymer solution (binder composition), a composition containing 15 parts of acrylonitrile (nitrile group-containing monomer), 49 parts of 1,3-butadiene (conjugated diene monomer), 30 parts of n-butyl acrylate (C4-C9 (meth)acrylic acid ester monomer), 4 parts of 1,4-cyclohexanedimethanol monoacrylate (hydrophilic group-containing monomer), and 2 parts of methacrylic acid (hydrophilic group-containing monomer) was used as a monomer composition. The results are shown in Table 1.

(Comparative Example 1)

Various operations, measurements, and evaluations were performed in the same way as in Example 1 with the exception that in production of the copolymer solution (binder composition), a composition containing 8 parts of acrylonitrile (nitrile group-containing monomer), 52 parts of 1,3-butadiene (conjugated diene monomer), 35 parts of n-butyl acrylate (C4-C9 (meth)acrylic acid ester monomer), and 5 parts of 1,4-cyclohexanedimethanol monoacrylate (hydrophilic group-containing monomer) was used as a monomer composition. The results are shown in Table 1.

(Comparative Example 2)

Various operations, measurements, and evaluations were performed in the same way as in Example 1 with the exception that in production of the copolymer solution (binder composition), a composition containing 28 parts of acrylonitrile (nitrile group-containing monomer), 32 parts of 1,3-butadiene (conjugated diene monomer), 35 parts of n-butyl acrylate (C4-C9 (meth)acrylic acid ester monomer), and 5 parts of 1,4-cyclohexanedimethanol monoacrylate (hydrophilic group-containing monomer) was used as a monomer composition. The results are shown in Table 1.

(Comparative Example 3)

Various operations, measurements, and evaluations were performed in the same way as in Example 1 with the exception that in production of the copolymer solution (binder composition), the polymerization temperature of emulsion polymerization was changed from 10°C to 6°C. The results are shown in Table 1.

(Comparative Example 4)

Various operations, measurements, and evaluations were performed in the same way as in Example 1 with the exception that in production of the copolymer solution (binder composition), the polymerization temperature of emulsion polymerization was changed from 10°C to 20°C. The results are shown in Table 1.

(Comparative Example 5)

Various operations, measurements, and evaluations were performed in the same way as in Example 1 with the exception that xylene was used instead of isobutyl isobutyrate in production of the copolymer solution (binder composition), in production of the slurry composition for a positive electrode mixed material layer, in production of the slurry composition for a negative electrode mixed material layer, and in production of the slurry composition for a solid electrolyte layer. The results are shown in Table 1.

(Comparative Example 6)

Various operations, measurements, and evaluations were performed in the same way as in Example 1 with the exception that cyclopentyl methyl ether was used instead of isobutyl isobutyrate in production of the copolymer solution (binder composition), in production of the slurry composition for a positive electrode mixed material layer, in production of the slurry composition for a negative electrode mixed material layer, and in production of the slurry composition for a solid electrolyte layer. The results are shown in Table 1.

In Table 1:

"C4-C9 (meth)acrylic acid ester monomer unit" indicates (meth)acrylic acid ester monomer unit including alkyl group having carbon number of not less than 4 and not more than 9;
"AN" indicates acrylonitrile unit;
"BD" indicates 1,3-butadiene unit;
"H-BD" indicates hydrogenated 1,3-butadiene unit;
"BA" indicates n-butyl acrylate unit;
"CHDMMA" indicates 1,4-cyclohexanedimethanol monoacrylate unit;
"HEMA" indicates 2-hydroxyethyl methacrylate unit;
"MAA" indicates methacrylic acid unit;
"St" indicates styrene unit; and
"CPME" indicates cyclopentyl methyl ether.

[Table 1]

| | | | | | Examples | | | | | | | | | | | | | | | Comparative examples | | | | | |
|---|---|---|---|---|---|---|---|---|---|---|---|---|---|---|---|---|---|---|---|---|---|---|---|---|---|
| | | | | | 1 | 2 | 3 | 4 | 5 | 6 | 7 | 8 | 9 | 10 | 11 | 12 | 13 | 14 | 15 | 1 | 2 | 3 | 4 | 5 | 6 |
| Binder composition | Copolymer | Chemical composition | Nitrile group-containing monomer unit [mass%] | AN | 18 | 18 | 15 | 18 | 13 | 21 | 18 | 18 | 18 | 18 | 18 | 18 | 18 | 17 | 15 | 8 | 28 | 18 | 18 | 18 | 18 |
| | | | Conjugated diene monomer unit + alkylene structural unit [mass%] | BD + H-BD | 42 | 44 | 40 | 42 | 47 | 39 | 42 | 42 | 42 | 32 | 52 | 42 | 42 | 48 | 49 | 52 | 32 | 42 | 42 | 42 | 42 |
| | | | C4-C9 (meth)acrylic acid ester monomer unit [mass%] | BA | 35 | 35 | 30 | 35 | 35 | 35 | 35 | 35 | 35 | 45 | 25 | 35 | 35 | 35 | 30 | 35 | 35 | 35 | 35 | 35 | 35 |
| | | | Hydrophilic group-containing monomer unit [mass%] | CHDMMA | 5 | - | 5 | 5 | 5 | 5 | 5 | 5 | 5 | 5 | 5 | 5 | 5 | 0 | 4 | 5 | 5 | 5 | 5 | 5 | 5 |
| | | | | HEMA | - | 3 | - | - | - | - | - | - | - | - | - | - | - | - | - | - | - | - | - | - | - |
| | | | | MAA | - | - | - | - | - | - | - | - | - | - | - | - | - | - | 2 | - | - | - | - | - | - |
| | | | Aromatic vinyl monomer unit [mass%] | St | - | - | 10 | - | - | - | - | - | - | - | - | - | - | - | - | - | - | - | - | - | - |
| | | Weight-average molecular weight [-] | | | 500,000 | 500,000 | 550,000 | 500,000 | 650,000 | 800,000 | 600,000 | 850,000 | 500,000 | 500,000 | 450,000 | 550,000 | 550,000 | 400,000 | 400,000 | 600,000 | 600,000 | 700,000 | 1,300,000 | 500,000 | 500,000 |
| | | Molecular weight distribution [-] | | | 2.7 | 2.5 | 2.7 | 2.7 | 2.3 | 3.6 | 2.2 | 3 | 2.7 | 2.7 | 2.5 | 2.7 | 2.7 | 2.5 | 2.5 | 2.7 | 2.7 | 2.2 | 3.4 | 2.7 | 2.7 |
| | | THF-insoluble fraction [mass%] | | | 1.2 | 1.2 | 1.2 | 1.2 | 1.3 | 1.3 | 0.7 | 2.2 | 1.2 | 1.2 | 1.2 | 1.2 | 1.2 | 1.2 | 1.2 | 1.2 | 1.2 | 0.4 | 3.5 | 1.2 | 1.2 |
| | | Iodine value [mg/100 mg] | | | 5 | 5 | 5 | 5 | 5 | 5 | 5 | 5 | 5 | 5 | 5 | 20 | 1 | 5 | 5 | 5 | 5 | 5 | 5 | 5 | 5 |
| | | Polymerization conditions | Polymerization temperature [°C] | | 10 | 10 | 10 | 10 | 10 | 10 | 8 | 15 | 10 | 10 | 10 | 10 | 10 | 10 | 10 | 10 | 10 | 6 | 20 | 10 | 10 |
| | | | Amount of catalyst in hydrogenation reaction [mass ppm] | | 500 | 500 | 500 | 500 | 500 | 500 | 500 | 500 | 500 | 500 | 500 | 200 | 2000 | 500 | 500 | 500 | 500 | 500 | 500 | 500 | 500 |
| | Type of solvent | | | | Isobutyl iso-butyrate | Isobutyl iso-butyrate | Isobutyl iso-butyrate | Butyl butyrate | Isobutyl iso-butyrate | Isobutyl iso-butyrate | Isobutyl iso-butyrate | Isobutyl iso-butyrate | Octyl acetate | Isobutyl iso-butyrate | Isobutyl iso-butyrate | Isobutyl iso-butyrate | Isobutyl iso-butyrate | Isobutyl iso-butyrate | Isobutyl iso-butyrate | Isobutyl iso-butyrate | Isobutyl iso-butyrate | Isobutyl iso-butyrate | Isobutyl iso-butyrate | Xylene | CPME |
| | Haze [%] | | | | 60 | 60 | 60 | 60 | 50 | 75 | 60 | 60 | 40 | 60 | 60 | 60 | 60 | 60 | 60 | 50 | 90 | 60 | 60 | 5 | 5 |
| Evaluation | Adhesiveness of positive electrode mixed material layer | | | | A+ | A+ | A+ | A+ | B | B | B | B | B | A | A | A | A | A | A+ | D | D | D | D | C | C |
| | Adhesiveness of negative electrode mixed material layer | | | | A+ | A+ | A+ | A+ | B | B | B | B | B | A | A | A | A | A | A+ | D | D | D | D | C | C |
| | IV resistance of all-solid-state secondary battery | | | | A | A | A | A | A | B | A | B | B | B | B | A | A | A | A | D | D | C | D | D | D |
| | Cycle characteristics of all-solid-state secondary battery | | | | A | A | A | A | A | B | B | B | B | B | A | B | B | A | A | D | D | D | D | D | D |

As can clearly be seen from Table 1, internal resistance of an all-solid-state secondary battery is reduced and adhesiveness of a functional layer for an all-solid-state secondary battery is excellent in Examples 1 to 15.

INDUSTRIAL APPLICABILITY

According to the present disclosure, it is possible to provide a binder composition for an all-solid-state secondary battery that can reduce internal resistance of an all-solid-state secondary battery while also imparting excellent adhesiveness to a functional layer for an all-solid-state secondary battery.

Moreover, according to the present disclosure, it is possible to provide a slurry composition for an all-solid-state secondary battery that can reduce internal resistance of an all-solid-state secondary battery while also imparting excellent adhesiveness to a functional layer for an all-solid-state secondary battery.

Furthermore, according to the present disclosure, it is possible to provide a functional layer for an all-solid-state secondary battery that can reduce internal resistance of an all-solid-state secondary battery while also displaying excellent adhesiveness.

Also, according to the present disclosure, it is possible to provide an all-solid-state secondary battery having reduced internal resistance while also having strong adhesion between battery materials.

## Claims

1. A binder composition for an all-solid-state secondary battery comprising: a copolymer including a nitrile group-containing monomer unit; and a solvent, wherein

   the solvent includes an ester solvent having a carbon number of 6 or more,
   proportional content of the nitrile group-containing monomer unit in the copolymer is not less than 10 mass% and not more than 22 mass% when all repeating units in the copolymer are taken to be 100 mass%,
   the copolymer has a tetrahydrofuran-insoluble fraction of not less than 0.5 mass% and not more than 3 mass%, and
   a copolymer solution obtained when the copolymer is dissolved in the solvent such that concentration of the copolymer is 8 mass% has a haze of not less than 30% and not more than 80%.

2. The binder composition for an all-solid-state secondary battery according to claim 1, wherein the copolymer has an iodine value of not less than 0.5 mg/100 mg and not more than 30 mg/100 mg.

3. The binder composition for an all-solid-state secondary battery according to claim 1 or 2, wherein

   the copolymer further includes an alkylene structural unit,
   the alkylene structural unit is a hydrogenated 1,3-butadiene unit, and
   the nitrile group-containing monomer unit is an acrylonitrile unit.

4. The binder composition for an all-solid-state secondary battery according to any one of claims 1 to 3, wherein the copolymer includes a (meth)acrylic acid ester monomer unit including an alkyl group having a carbon number of not less than 4 and not more than 9.

5. The binder composition for an all-solid-state secondary battery according to claim 4, wherein proportional content of the (meth)acrylic acid ester monomer unit including an alkyl group having a carbon number of not less than 4 and not more than 9 in the copolymer is not less than 25 mass% and not more than 45 mass% when all repeating units in the copolymer are taken to be 100 mass%.

6. The binder composition for an all-solid-state secondary battery according to any one of claims 1 to 5, wherein the copolymer includes a hydrophilic group.

7. A slurry composition for an all-solid-state secondary battery comprising: functional particles; and the binder composition for an all-solid-state secondary battery according to any one of claims 1 to 6.

8. The slurry composition for an all-solid-state secondary battery according to claim 7, wherein the functional particles are either or both of solid electrolyte particles and electrode active material particles.

9. A functional layer for an all-solid-state secondary battery formed using the slurry composition for an all-solid-state secondary battery according to claim 7 or 8.

10. An all-solid-state secondary battery comprising the functional layer for an all-solid-state secondary battery according to claim 9.

## INTERNATIONAL SEARCH REPORT

International application No. **PCT/JP2023/019395**

**A. CLASSIFICATION OF SUBJECT MATTER**

***H01M 10/0562***(2010.01)i; ***C08F 8/04***(2006.01)i; ***H01M 4/13***(2010.01)i; ***H01M 4/139***(2010.01)i; ***H01M 4/62***(2006.01)i; ***H01M 10/052***(2010.01)i

FI: H01M10/0562; H01M4/62 Z; H01M4/139; H01M4/13; C08F8/04; H01M10/052

According to International Patent Classification (IPC) or to both national classification and IPC

**B. FIELDS SEARCHED**

Minimum documentation searched (classification system followed by classification symbols)

H01M10/0562; C08F8/04; H01M4/13; H01M4/139; H01M4/62; H01M10/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-007461 A (DAIKIN IND LTD) 16 January 2020 (2020-01-16) entire text, all drawings | 1-10 |
| A | JP 2013-020752 A (MITSUBISHI RAYON CO LTD) 31 January 2013 (2013-01-31) entire text, all drawings | 1-10 |
| A | JP 2011-076916 A (NIPPON ZEON CO LTD) 14 April 2011 (2011-04-14) entire text, all drawings | 1-10 |
| A | JP 2006-131808 A (NITTO DENKO CORP) 25 May 2006 (2006-05-25) entire text, all drawings | 1-10 |
| A | JP 2005-100951 A (NITTO DENKO CORP) 14 April 2005 (2005-04-14) entire text, all drawings | 1-10 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 July 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (January 2015)

**INTERNATIONAL SEARCH REPORT**
**Information on patent family members**

International application No.
**PCT/JP2023/019395**

| Patent document cited in search report | Publication date (day/month/year) | Patent family member(s) | Publication date (day/month/year) |
|---|---|---|---|
| JP 2020-007461 A | 16 January 2020 | (Family: none) | |
| JP 2013-020752 A | 31 January 2013 | (Family: none) | |
| JP 2011-076916 A | 14 April 2011 | (Family: none) | |
| JP 2006-131808 A | 25 May 2006 | US 2013/0004654 A1<br>entire text, all drawings<br>EP 1657766 A1 | |
| JP 2005-100951 A | 14 April 2005 | US 2011/0232081 A1<br>entire text, all drawings<br>WO 2005/020350 A1<br>EP 1667253 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5768815 B
- JP 2020525992 A
- JP 4509792 B